# EUROPEAN PATENT APPLICATION

(11) **EP 4 701 146 A1**
(43) Date of publication of application: **25.02.2026**
(21) Application number: 24802550.4
(22) Date of filing: 06.02.2024
(51) Int. Cl.: H04L 41/0246

(54) **NETWORK OPERATION AND MAINTENANCE METHOD AND APPARATUS BASED ON LARGE LANGUAGE MODEL, AND DEVICE AND STORAGE MEDIUM**

(30) Priority: 10.05.2023 CN 202310525410; 31.07.2023 CN 202310957610
(71) Applicant: Huawei Technologies Co., Ltd., Shenzhen, Guangdong 518129 (CN)
(72) Inventor: HUANG, Zengjun, Shenzhen, Guangdong 518129 (CN); WANG, Yuchen, Shenzhen, Guangdong 518129 (CN); TANG, Wenfang, Shenzhen, Guangdong 518129 (CN); MENG, Weibin, Shenzhen, Guangdong 518129 (CN); SONG, Xiaolin, Shenzhen, Guangdong 518129 (CN)
(74) Representative: Isarpatent
(86) International application number: PCT/CN2024/076422
(87) International publication number: WO 2024/230262

(57) **Abstract**

This application discloses a large language model-based network operation and maintenance method and apparatus, a device, and a storage medium, and pertains to the field of communication technologies. In this method, a network operation and maintenance intention of a user is identified from a dialog message of the user by using a large language model, to establish, based on the network operation and maintenance intention, an operation and maintenance task that the user expects to execute on a network. After execution of the operation and maintenance task is completed, an execution result of the operation and maintenance task is provided for a client. In this process, the user only needs to provide the dialog message in a form of dialog, and does not need to interact with the client for a plurality of times. This simplifies an operation procedure for network operation and maintenance, and can improve network operation and maintenance efficiency.

## Description

This application claims priority to Chinese Patent Application No. 202310525410.7, filed on May 10, 2023 and entitled "NETWORK OPERATION AND MAINTENANCE METHOD AND APPARATUS, AND SYSTEM", and to Chinese Patent Application No. 202310957610.X, filed on July 31, 2023 and entitled "LARGE LANGUAGE MODEL-BASED NETWORK OPERATION AND MAINTENANCE METHOD AND APPARATUS, DEVICE, AND STORAGE MEDIUM", both of which are incorporated herein by reference in their entireties.

### TECHNICAL FIELD

This application relates to the field of communication technologies, and in particular, to a large language model-based network operation and maintenance method and apparatus, a device, and a storage medium.

### BACKGROUND

In a related technology, a plurality of network operation and maintenance systems are usually deployed in a network, and an administrator performs operations on each network operation and maintenance system to complete network operation and maintenance. Difficulty and complexity of network operation and maintenance depend on functions of the network operation and maintenance systems and the administrator's familiarity with the network and the network operation and maintenance systems. For example, if the administrator is not familiar with the network and the network operation and maintenance systems, network operation and maintenance becomes more difficult and complex, resulting in low network operation and maintenance efficiency. For another example, the administrator needs to perform a large quantity of operations or enter a large quantity of instructions in the network operation and maintenance systems, to execute an operation and maintenance task in the network by using the network operation and maintenance systems. Consequently, an operation procedure is complex, and network operation and maintenance efficiency is low.

### SUMMARY

Embodiments of this application provide a large language model-based network operation and maintenance method and apparatus, a device, and a storage medium, to improve network operation and maintenance efficiency. Technical solutions are as follows.

According to a first aspect, a large language model-based network operation and maintenance method is provided. In the method, for an input dialog message, a network operation and maintenance intention of the dialog message is first determined based on a large language model; then a to-be-executed network operation and maintenance task is obtained based on the network operation and maintenance intention; and next the operation and maintenance task is executed and a dialog response is output.

In this method, the network operation and maintenance intention of a user is identified from the dialog message of the user by using the large language model, to establish, based on the network operation and maintenance intention, the network operation and maintenance task that the user expects to execute on a network. After execution of the network operation and maintenance task is completed, an execution result of the network operation and maintenance task is provided for a client. In this process, the user only needs to provide the dialog message in a form of dialog, and does not need to interact with the client for a plurality of times. This simplifies an operation procedure for network operation and maintenance, and can improve network operation and maintenance efficiency.

In a possible implementation, the network operation and maintenance intention includes an operation and maintenance task intention and an operation and maintenance scenario intention. Based on this, the foregoing process of obtaining the network operation and maintenance task may be: orchestrating the network operation and maintenance task for the operation and maintenance task intention based on the large language model and an application programming interface corresponding to the operation and maintenance scenario intention, to obtain task information, where the application programming interface herein is used to complete the network operation and maintenance task corresponding to the operation and maintenance scenario intention, the task information is the orchestrated network operation and maintenance task, and the task information indicates a process of calling the application programming interface during execution of the network operation and maintenance task.

Based on the foregoing possible implementation, the network operation and maintenance task is automatically orchestrated by using the large language model, and the user does not need to manually orchestrate the task. This simplifies a network operation and maintenance process, reduces difficulty of network operation and maintenance, and can improve network operation and maintenance efficiency.

In a possible implementation, the operation and maintenance task intention includes a plurality of operation and maintenance task sub-intentions. Based on this, the foregoing process of obtaining the task information based on the large language model may be: separately orchestrating network operation and maintenance subtasks for the plurality of operation and maintenance task sub-intentions based on the large language model and the application programming interface, to obtain a plurality of pieces of subtask information; and obtaining the task information of the operation and maintenance task based on the plurality of pieces of subtask information, where the subtask information is the orchestrated network operation and maintenance subtask, and the subtask information indicates a process of calling the application programming interface during execution of the network operation and maintenance subtask.

When the network operation and maintenance task includes a plurality of network operation and maintenance subtasks, it is difficult to manually orchestrate the network operation and maintenance task, and the user needs to well understand each application programming interface of the network. Based on the foregoing possible implementation, the network operation and maintenance task is automatically orchestrated by using the language model, and the user does not need to manually orchestrate the task. This simplifies a network operation and maintenance process, reduces difficulty of network operation and maintenance, and can improve network operation and maintenance efficiency.

In a possible implementation, the large language model is not locally stored, and the network operation and maintenance task is orchestrated by calling a remote large language model. For example, description information of the application programming interface is first obtained; then task orchestration prompt information is generated based on the operation and maintenance task intention, a first prompt statement, and the description information of the application programming interface; the task orchestration prompt information is sent to a device running the large language model; and next the task information returned by the device is received.

Based on the foregoing possible implementation, the network operation and maintenance task is orchestrated by calling the large language model in another device, to reduce consumption of local computing power resources.

In a possible implementation, the description information of the application programming interface is obtained from a network management device. For example, an information obtaining request is sent to the network management device; and the description information returned by the network management device is received, where the information obtaining request indicates to obtain the description information of the application programming interface.

Based on the foregoing possible implementation, the current description information of the application programming interface is obtained from the network side, so that the large language model can orchestrate an appropriate network operation and maintenance task based on the current description information of the application programming interface, thereby improving reasonableness of the orchestrated network operation and maintenance task.

In a possible implementation, the operation and maintenance scenario intention is any one of the following: a network planning scenario, a network construction scenario, a network maintenance scenario, a network optimization scenario, a network data query scenario, and a knowledge-based question answering scenario.

Based on the foregoing possible implementation, according to the method provided in this embodiment of this application, a final question and answer result can be provided for the user with regard to dialog messages in a plurality of operation and maintenance scenarios, and therefore operation and maintenance scenarios are not limited; and an operation and maintenance service can be provided for the user in various operation and maintenance scenarios, and therefore dependency of the user on a network operation and maintenance system can be increased and user stickiness of the network operation and maintenance system can be improved.

In a possible implementation, the network operation and maintenance intention includes a first operation and maintenance task sub-intention and a second operation and maintenance task sub-intention. Based on this, after the network operation and maintenance intention is determined, the method further includes the following steps: sending the first operation and maintenance task sub-intention to a first device, and sending the second operation and maintenance task sub-intention to a second device; obtaining an execution result of a first network operation and maintenance subtask from the first device, and obtaining an execution result of a second network operation and maintenance subtask from the second device; and outputting the dialog response based on the execution result of the first network operation and maintenance subtask and the execution result of the second network operation and maintenance subtask.

Based on the foregoing possible implementation, the operation and maintenance task sub-intentions in the operation and maintenance task intention are distributed to a plurality of devices, and the plurality of devices process the operation and maintenance task sub-intentions in parallel. This improves efficiency of processing the operation and maintenance task intention, and reduces response duration of the dialog message.

In a possible implementation, a message processing device is located in a cloud, or the message processing device is located in an operation support system, an element management system, or a network management system of a network.

In a possible implementation, the network operation and maintenance intention is determined by calling the large language model. For example, operation and maintenance intention prompt information is generated based on the dialog message and a second prompt statement, where the second prompt statement is used to prompt the large language model to identify the network operation and maintenance intention of the dialog message, and prompt the large language model to output the identified network operation and maintenance intention; then the operation and maintenance intention prompt information is sent to the device running the large language model; and the network operation and maintenance intention returned by the device is received.

Based on the foregoing possible implementation, the network operation and maintenance intention of the dialog message is identified by using the first large language model in the another device, to reduce consumption of local computing power resources.

In a possible implementation, the another device is located in the cloud, or a decision device is located in the operation support system, the element management system, or the network management system of the network.

According to a second aspect, a large language model-based network operation and maintenance apparatus is provided. The apparatus includes functional modules configured to perform the method provided in any one of the first aspect or the optional implementations of the first aspect.

According to a third aspect, a computer device is provided. The computer device includes a processor, and the processor is configured to execute program code, to cause the computer device to implement the method provided in the first aspect or the optional implementations of the first aspect.

According to a fourth aspect, a computer-readable storage medium is provided. The storage medium stores at least one piece of program code, and the program code is read by a processor, to cause a computer device to implement the method provided in the first aspect or the optional implementations of the first aspect.

Based on the implementations provided in the foregoing aspects, the implementations in this application may be further combined to provide more implementations.

### BRIEF DESCRIPTION OF DRAWINGS

FIG. 1 is a diagram of an architecture of a large language model-based network operation and maintenance system according to an embodiment of this application;
FIG. 2 is a deployment diagram of a network operation and maintenance system according to an embodiment of this application;
FIG. 3 is a deployment diagram of another network operation and maintenance system according to an embodiment of this application;
FIG. 4 is a deployment diagram of another network operation and maintenance system according to an embodiment of this application;
FIG. 5 is a deployment diagram of another network operation and maintenance system according to an embodiment of this application;
FIG. 6 is a deployment diagram of another network operation and maintenance system according to an embodiment of this application;
FIG. 7 is a deployment diagram of another network operation and maintenance system according to an embodiment of this application;
FIG. 8 is a deployment diagram of another network operation and maintenance system according to an embodiment of this application;
FIG. 9 is a deployment diagram of another network operation and maintenance system according to an embodiment of this application;
FIG. 10 is a flowchart of a large language model-based network operation and maintenance method according to an embodiment of this application;
FIG. 11 is a diagram of a dialog interface according to an embodiment of this application;
FIG. 12 is a flowchart of another large language model-based network operation and maintenance method according to an embodiment of this application;
FIG. 13 is a flowchart of another large language model-based network operation and maintenance method according to an embodiment of this application;
FIG. 14 is a diagram of another dialog interface according to an embodiment of this application;
FIG. 15 is a flowchart of another large language model-based network operation and maintenance method according to an embodiment of this application;
FIG. 16 is a diagram of a structure of a large language model-based network operation and maintenance apparatus according to an embodiment of this application; and
FIG. 17 is a diagram of a structure of a computer device according to an embodiment of this application.

### DESCRIPTION OF EMBODIMENTS

For ease of understanding technical solutions proposed in this application, herein some terms in this application are interpreted as follows.

A large language model (large language model, LLM) is a computer model that can process and generate a natural language. The LLM is an artificial intelligence technology based on deep learning, and can predict a next word or sentence by learning a statistical rule and semantic information of language data. The LLM usually includes a plurality of neural networks (such as a feedforward neural network and a recursive neural network). The feedforward neural network is used to extract features of an input text, and the recursive neural network is used to model a text sequence. By continuously training a large amount of text data, the LLM can gradually improve understanding and prediction capabilities of a natural language. With improvement of an LLM capability, the LLM can be applied to a plurality of application fields, such as natural language processing, machine translation, text generation, robotics, machine learning, speech recognition, and image processing. Therefore, the LLM may also be referred to as a multimodal large language model (multimodal large language model, MLLM).

To make objectives, technical solutions, and advantages of this application clearer, the following further describes implementations of this application in detail with reference to accompanying drawings.

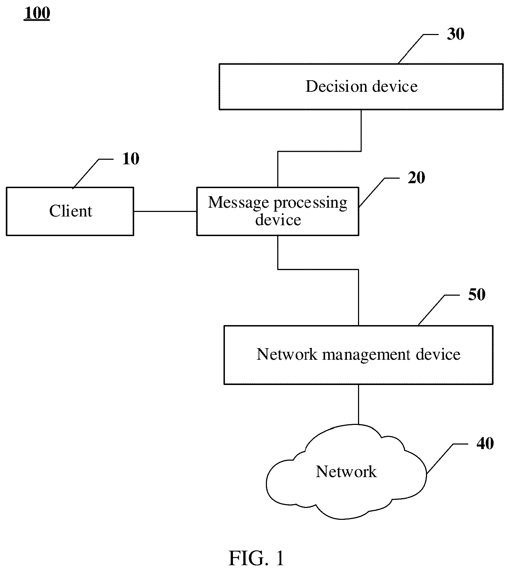

FIG. 1 is a diagram of an architecture of a large language model-based network operation and maintenance system according to an embodiment of this application. With reference to FIG. 1, the network operation and maintenance system 100 includes a client (client) 10, a message processing device 20, a decision device 30, and a network management device 50 of a network 40. The network 40 generally refers to a device cluster including a plurality of devices, the plurality of devices may be network devices, and the network 40 including the network devices is a communication network configured to provide a communication function. Alternatively, the plurality of devices may be computer devices, and the network 40 including the plurality of computer devices is a computer device cluster configured to provide a computing function. Alternatively, the plurality of devices may be storage devices, and the network 40 including the plurality of storage devices is a storage device cluster configured to provide a data storage function. The network 40 may be deployed in a cloud (a private cloud or a public cloud), or may not be deployed in a cloud. Herein, a deployment environment of the network 40 is not limited in embodiments of this application.

The network management device 50 is connected to the network 40. The network management device 50 is configured to manage and/or maintain resources of the network 40, for example, hardware-type resources, software-type resources, and service-type resources. The hardware-type resources are resources of the network 40 in terms of hardware, the software-type resources are resources of the network 40 in terms of software, and the service-type resources are resources for externally providing services by the network 40, for example, computing resources, storage resources, and communication resources. The communication resources are resources related to communication of the network 40, for example, a network bandwidth, a network delay, a network packet loss, and a network infrastructure. The network infrastructure refers to all hardware and software used to support organizational network communication. For example, the network 40 is a communication network including network devices. The network management device 50 has management capabilities such as planning, creation, operation and maintenance, and network optimization for the network devices in the network 40.

The client 10 is configured to provide a human-computer interaction interface, and receive a dialog message input by a user (for example, an administrator of the network 40) for the network 40. The client 10 is connected to the message processing device 20, provides the message processing device 20 with the dialog message input by the user, and presents, on the human-computer interaction interface, a dialog response made by the message processing device 20 to the dialog message, to implement a human-computer dialog. The human-computer interaction interface may be an entry based on question and answer interaction. The user may send question-type information or non-question-type information for the network 40 to the message processing device 20 in a natural language form through the human-computer interaction interface. The question-type information or the non-question-type information is provided for the message processing device 20 in a dialog message form, and the message processing device 20 responds to the question-type information or the non-question-type information.

The message processing device 20 is a network operation and maintenance assistant in the network operation and maintenance system 100. The message processing device 20 is connected to the client 10, the decision device 30, and the network management device 50. The message processing device 20 is equivalent to a link (or bridge) between the client 10, the decision device 30, and the network management device 50. The message processing device 20 is configured to: process the dialog message provided by the client; for the dialog message provided by the client 10, analyze a network operation and maintenance intention of the dialog message by calling a large language model in the decision device 30; obtain, from the network management device 50, dynamic data that is on a side of the network 40 and that is related to the network operation and maintenance intention; provide the dynamic data that is on the side of the network 40 and that is related to the network operation and maintenance intention for the large language model in the decision device 30; orchestrate a network operation and maintenance task for the network operation and maintenance intention by calling the large language model; and deliver the network operation and maintenance task to the network management device 50. The network management device 50 executes the delivered network operation and maintenance task to manage or/and maintain the resources of the network 40, and feeds back an execution result of the network operation and maintenance task to the message processing device 20. Further, the message processing device 20 provides the client 10 with the execution result of the network operation and maintenance task as the dialog response, and the client 10 presents the execution result on the human-computer interaction interface in an information-based or graphical manner.

The decision device 30 is a decision maker in the network operation and maintenance system 100. The decision device 30 is configured to provide the large language model in the network operation and maintenance field. For example, the network 40 is a communication network. The large language model is obtained through training based on training data of the communication network in the network operation and maintenance field and a basic large language model in the communication field, and therefore the large language model has capabilities of analyzing a user intention (that is, the network operation and maintenance intention) of the dialog message in the network operation and maintenance field, orchestrating the network operation and maintenance task based on the network operation and maintenance intention, converting the execution result of the network operation and maintenance task into information that can be understood by the user, and the like. The training data is, for example, text information, log data of the communication network, log analysis data, a product code, and a work order that are involved in a process in which the user performs operation and maintenance on the communication network. The information that can be understood by the user is, for example, information represented by a natural language, a graph, recommendation information, guidance information, and navigation information.

In some possible implementations, the decision device 30 further has a capability of inferring and training the large language model, and the large language model provided by the decision device 30 is obtained through inference and training by a model service 30. In some other possible implementations, the decision device 30 does not have a capability of inferring and training the large language model, the large language model provided by the decision device 30 is obtained through inference and training by a device other than the decision device 30, and the large language model is merely deployed in the decision device 30.

The following describes, by using an example in which the network 40 is a communication network, a manner of deploying the client 10, the message processing device 20, the decision device 30, and the network management device 50 and a process of performing network operation and maintenance on the network 40 based on the large language model. Regarding another type of network 40, for a manner of deploying the client 10, the message processing device 20, the decision device 30, and the network management device 50 and a process of performing network operation and maintenance on the network 40 based on the large language model, refer to the communication network.

The client 10 is located in an operation support system (operation support systems, OSS) of a terminal or the network 40, the message processing device 20 is located in any one of a cloud, or the OSS, an element management system (element management system, EMS), or a network management system (network management system, NMS) of the network 40, the decision device 30 is located in any one of the cloud, the OSS, the EMS, or the NMS, and the network management device 50 is located in any one of the cloud, the OSS, the EMS, or the NMS. Based on this, each of the message processing device 20, the decision device 30, and the network management device 50 may be separately deployed in the cloud, the OSS, the EMS, or the NMS, or may be deployed in at least one of the cloud, the OSS, the EMS, or the NMS in a combined manner.

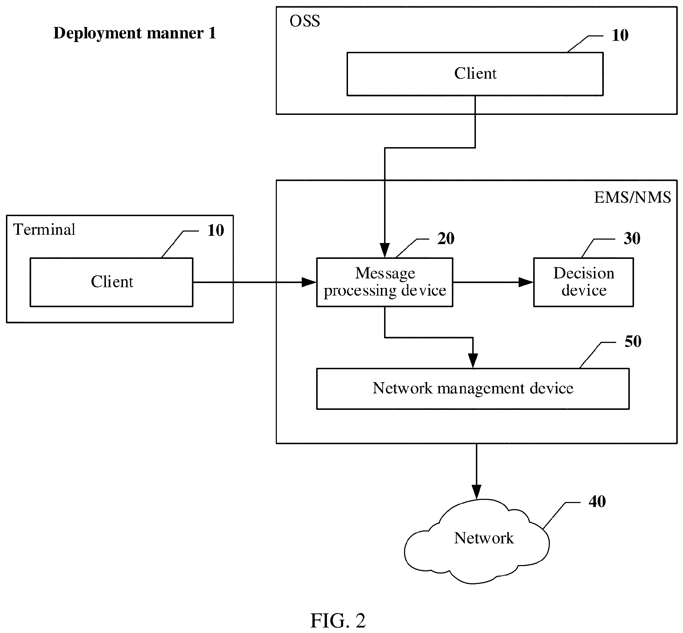

With reference to deployment diagrams of network operation and maintenance systems shown in FIG. 2 to FIG. 9, the following describes possible deployment manners of the modules in the network operation and maintenance system 100.

For the deployment manners shown in FIG. 2 to FIG. 9, there is at least one client 10, and each client 10 may be deployed in a terminal or an OSS. When there are a plurality of clients 10, some of the plurality of clients 10 may be deployed in the terminal, and the other clients 10 may be deployed in the OSS. Alternatively, all the plurality of clients 10 may be deployed in the terminal or the OSS. Herein, deployment locations of the clients 10 are not limited in embodiments of this application.

In a deployment manner 1 shown in FIG. 2, a message processing device 20, a decision device 30, and a network management device 50 are all deployed in an EMS/NMS (which indicates an EMS or an NMS). Clients 10 aggregate respective received session messages to the message processing device 20. For each session message, the message processing device 20 analyzes a network operation and maintenance intention of the session message by calling a large language model in the decision device 30, and performs network planning, network construction, network maintenance, network optimization, network data query, or the like on a network 40 (that is, executes a network operation and maintenance task on the network 40) based on the network operation and maintenance intention by using the network management device 50.

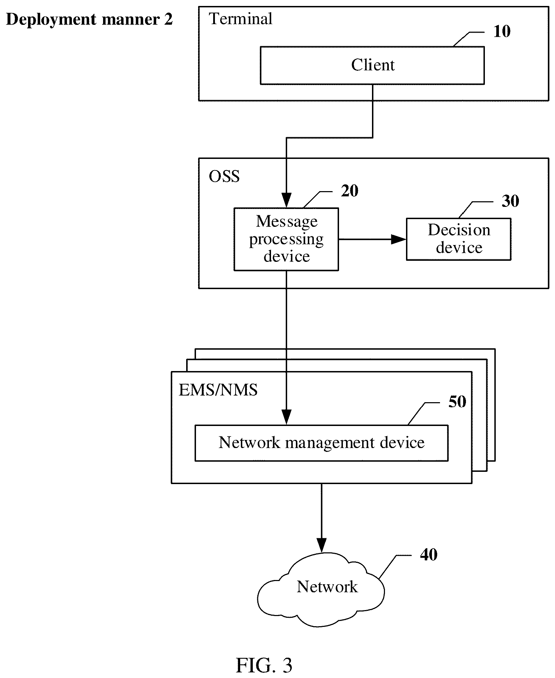

In a deployment manner 2 shown in FIG. 3, both a message processing device 20 and a decision device 30 are deployed in an OSS, there are a plurality of EMSs/NMSs, at least one network management device 50 is deployed in each EMS/NMS, and the message processing device 20 is connected to the network management device 50 in each EMS/NMS. Clients 10 aggregate respective received session messages to the message processing device 20. For each session message, the message processing device 20 analyzes a network operation and maintenance intention of the session message by calling a large language model in the decision device 30, and selects at least one network management device 50 from a plurality of network management devices 50 based on the network operation and maintenance intention, to execute a network operation and maintenance task on a network 40.

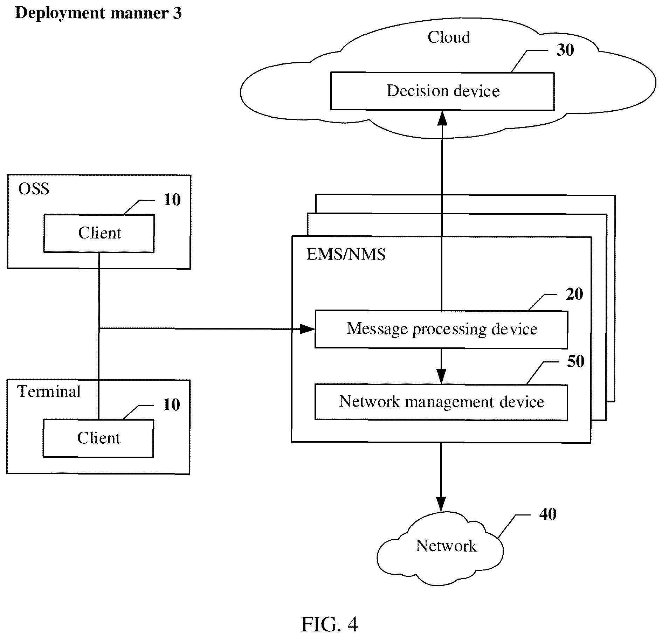

In a deployment manner 3 shown in FIG. 4, there are a plurality of EMSs/NMSs, at least one message processing device 20 and at least one network management device 50 are deployed in each EMS/NMS, and each message processing device 20 is connected to a network management device 50 in an EMS/NMS in which the message processing device 20 is located. A decision device 30 is deployed in a cloud, and the decision device 30 is connected to the session processor 20 in each EMS/NMS. Any client 10 sends a received session message to any message processing device 20 in any EMS/NMS. The message processing device 20 analyzes a network operation and maintenance intention of the session message by calling a large language model in the decision device 30, and executes a network operation and maintenance task on a network 40 based on the network operation and maintenance intention by using a management manager 50 in an EMS/NMS in which the message processing device 20 is located.

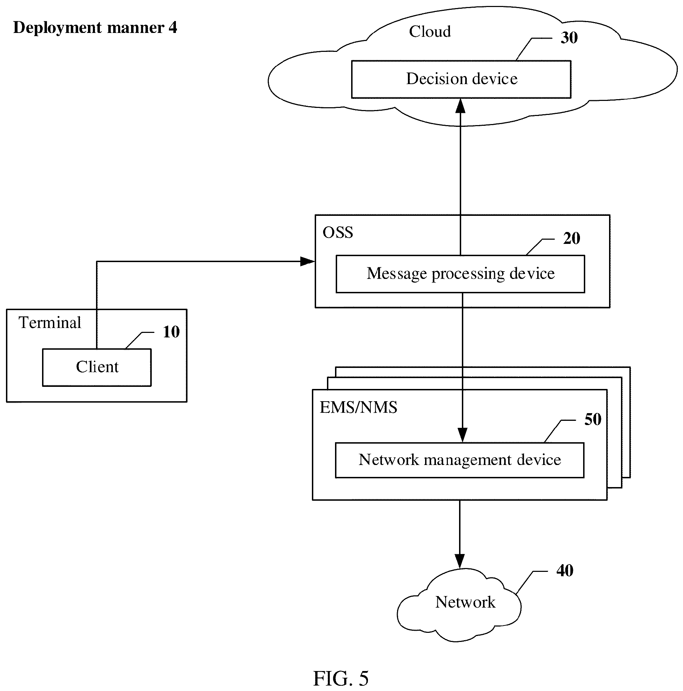

In a deployment manner 4 shown in FIG. 5, a message processing device 20 is deployed in an OSS. For example, there is one OSS, there is at least one message processing device 20, and the at least one message processing device 20 can be deployed in the OSS. Alternatively, there are a plurality of OSSs and message processing devices 20, and at least one message processing device 20 is deployed in each OSS. A decision device 30 is deployed in a cloud, and the decision device 30 is connected to each message processing device 20 in each OSS, so that the plurality of message processing devices 20 can share a large language model in the decision device 30. There are also a plurality of EMSs/NMSs, at least one network management device 50 is deployed in each EMS/NMS, and each network management device 50 is connected to each message processing device 20 in each OSS. Any client 10 sends a received session message to any message processing device 20 in any OSS. The message processing device 20 analyzes a network operation and maintenance intention of the session message by calling a large language model in the decision device 30, and selects at least one network management device 50 from a plurality of network management devices 50 based on the network operation and maintenance intention, to execute a network operation and maintenance task on a network 40.

For any one of the deployment manner 1 to the deployment manner 4, the network 40 may be connected to a plurality of network management devices 50, and the plurality of network management devices 50 have same management permission on the network 40. For example, each network management device 50 may perform network planning, network construction, network maintenance, network optimization, network data query, or the like on the network 40. In some other deployment manners, a plurality of network management devices 50 of the network 40 have different management levels, and the network management devices of the different management levels have different management permission on the network 40. For example, the plurality of network management devices 50 are classified into a network management device 51 and a network management device 52. A management level of the network management device 51 is higher than a management level of the network management device 52. The network management device 51 is an upper-level manager of the network management device 52, and there may be at least one network management device 52.

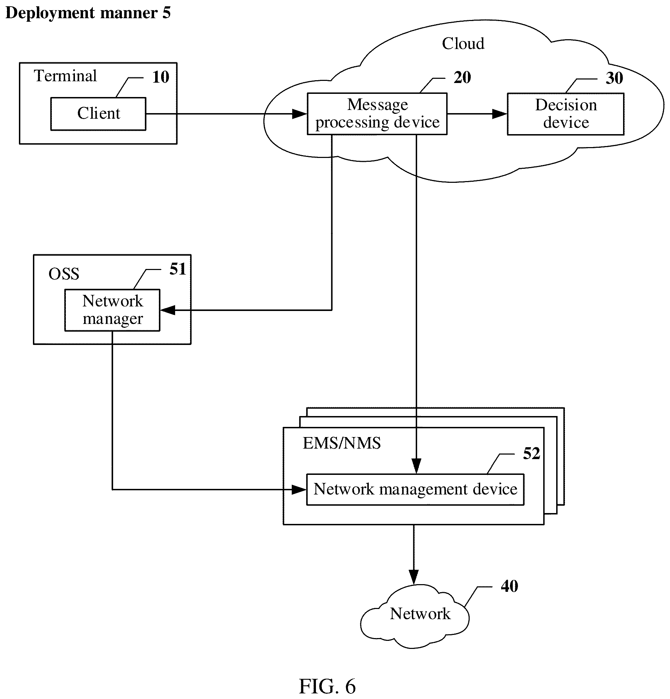

In a deployment manner 5 shown in FIG. 6, a network management device 51 is deployed in an OSS, at least one network management device 52 is deployed in each of a plurality of EMSs/NMSs, the network management device 51 is connected to a plurality of network management devices 52, and the plurality of network management devices 52 are all connected to a network 40. Both a message processing device 20 and a decision device 30 are deployed in a cloud. The message processing device 20 is connected to the network management device 51 and the network management devices 52. A session message of each client 10 is aggregated to the message processing device 20. The message processing device 20 analyzes a network operation and maintenance intention of the session message by calling a large language model in the decision device 30, and orchestrates a network operation and maintenance task for the network operation and maintenance intention. The message processing device 20 delivers the network operation and maintenance task to the network management device 51. The network management device 51 calls a network management device 52 to execute the network operation and maintenance task on the network 40. Alternatively, the message processing device 20 delivers the network operation and maintenance task to a network management device 52, and the network management device 52 executes the network operation and maintenance task on the network 40. Certainly, the message processing device 20 may alternatively not be connected to the network management devices 52. Correspondingly, the message processing device 20 executes the network operation and maintenance task by using a network management device 52. Alternatively, all of the network management device 51 and the plurality of network management devices 52 may be deployed in an OSS or an EMS/NMS.

The foregoing deployment manner 5 is shown by using an example in which network management devices 50 of different management levels share a same message processing device 20. In some other embodiments, one message processing device 20 is separately configured for network management devices 50 of different management levels. For example, the network operation and maintenance system 100 includes a network management device 51, a plurality of network management devices 52, a plurality of message processing devices 20, and a plurality of decision devices 30. The plurality of message processing devices 20 are classified into a message processing device 21 and a plurality of message processing devices 22. The message processing device 21 and the network management device 51 have a same management level, and the message processing device 21 is configured for the network management device 51. The message processing device 22 and the network management device 52 have a same management level, and each of the plurality of message processing devices 22 is configured for one network management device 52, so that the message processing device 21 becomes an upper-level manager of the message processing devices 22.

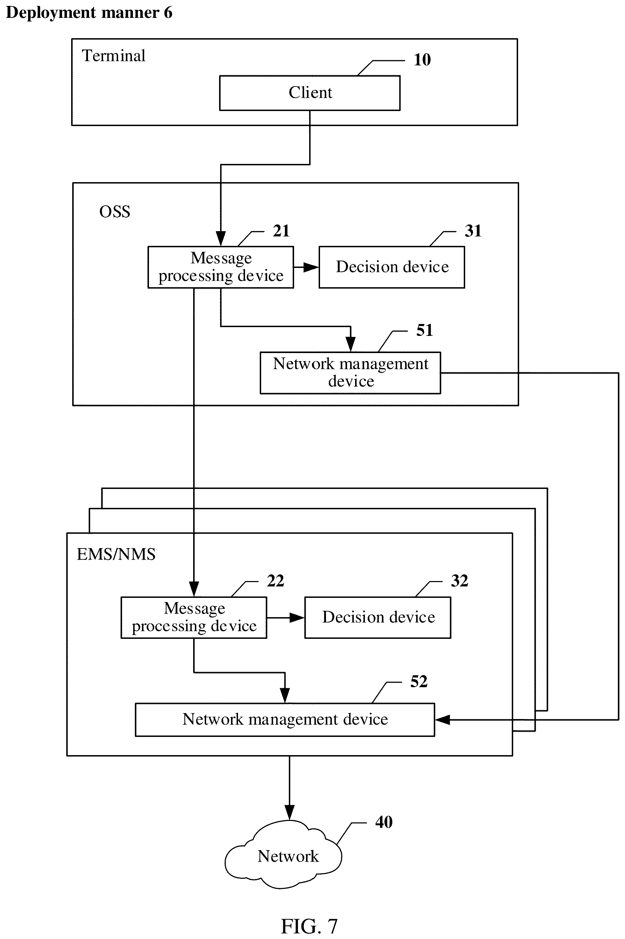

In a deployment manner 6 shown in FIG. 7, a message processing device 21, a decision device 31, and a network management device 51 are deployed in an OSS, and the message processing device 21 is connected to both the decision device 31 and the network management device 51. There are a plurality of EMSs/NMSs, a message processing device 22, a decision device 32, and a network management device 52 are deployed in each EMS/NMS, and each message processing device 22 is connected to both a decision device 32 and a network management device 52 in an EMS/NMS in which the message processing device 22 is located. A client 10 is connected to the message processing device 21, the message processing device 21 is also connected to each message processing device 22, and the network management device 51 is connected to each network management device 52. A session message of each client 10 is aggregated to the message processing device 21. The message processing device 21 analyzes a network operation and maintenance intention of the session message by calling a large language model in the first decision device 31, and delivers the network operation and maintenance intention to a message processing device 22. The message processing device 22 orchestrates a network operation and maintenance task for the network operation and maintenance intention by calling a large language model in a second decision device 32 in an EMS/NMS in which the message processing device 22 is located, and delivers the network operation and maintenance task to a network management device 52. The network management device 52 executes the network operation and maintenance task on a network 40. Alternatively, when the network operation and maintenance intention includes a plurality of operation and maintenance task sub-intentions, the message processing device 21 separately delivers the plurality of operation and maintenance task sub-intentions to message processing devices 22 in different EMSs/NMSs. Each message processing device 22 that receives an operation and maintenance task sub-intention orchestrates a network operation and maintenance subtask for the received operation and maintenance task sub-intention by calling a large language model in a second decision device 32 in an EMS/NMS in which the message processing device 22 is located, calls a network management device 52 connected to the message processing device 22 to execute the network operation and maintenance subtask on a network 40, and returns an execution result of the network operation and maintenance subtask to the message processing device 21. In this way, the message processing device 21 can obtain execution results of a plurality of network operation and maintenance subtasks, and return an execution result of a network operation and maintenance task corresponding to the network operation and maintenance intention to the client 10 based on the execution results of the plurality of network operation and maintenance subtasks. Alternatively, the message processing device 21 does not deliver the network operation and maintenance intention to the message processing device 22, orchestrates a network operation and maintenance task for the network operation and maintenance intention by calling the large language model in the first decision device 31, and executes the network operation and maintenance task by calling an application programming interface in the network management device 51.

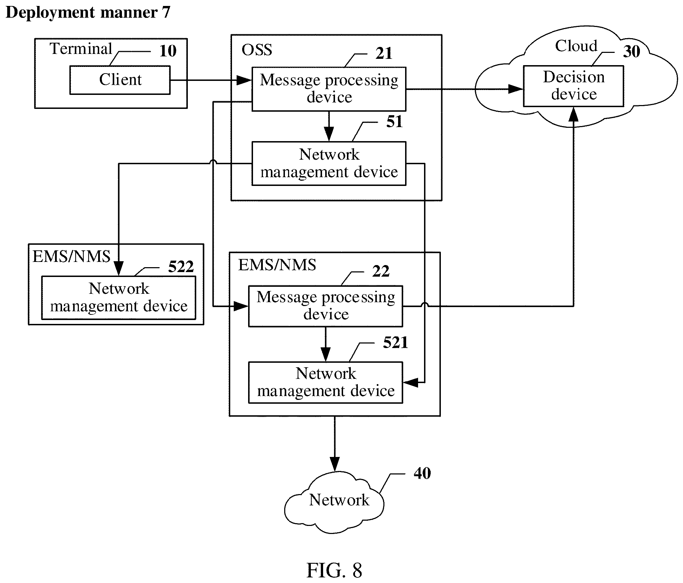

The foregoing deployment manner 6 is shown by using an example in which different large language models are configured for message processing devices 20 of different management levels. In some other embodiments, message processing devices 20 of different management levels share a same large language model. In a deployment manner 7 shown in FIG. 8, a decision device 30 is deployed in a cloud, a message processing device 21 and a network management device 51 are deployed in an OSS, and a plurality of network management devices 52 having a same management level are classified into a network management device 521 and a network management device 522. There are a plurality of EMSs/NMSs, a message processing device 22 and a network management device 521 are deployed in some EMSs/NMSs, and a network management device 522 but no message processing device 22 is deployed in the other EMSs/NMSs. Both the message processing device 21 and the message processing device 22 are connected to the decision device 30, to share a large language model in the decision device 30. A session message of each client 10 is aggregated to the message processing device 21. The message processing device 21 analyzes a network operation and maintenance intention of the session message by calling a large language model in the decision device 30. If the network operation and maintenance intention includes a plurality of operation and maintenance task sub-intentions, the message processing device 21 separately delivers the plurality of operation and maintenance task sub-intentions to message processing devices 22 in different EMSs/NMSs. Each message processing device 22 that receives an operation and maintenance task sub-intention orchestrates a network operation and maintenance subtask for the received operation and maintenance task sub-intention by calling the large language model in the decision device 30, calls a network management device 521 in an EMS/NMS in which the message processing device 22 is located, to execute the network operation and maintenance subtask on a network 40, and returns an execution result of the network operation and maintenance subtask to the message processing device 21. In this way, the message processing device 21 returns an execution result of a network operation and maintenance task corresponding to the network operation and maintenance intention to the client 10 based on execution results of a plurality of network operation and maintenance subtasks. If the network operation and maintenance intention does not include a plurality of operation and maintenance task sub-intentions, the message processing device 21 orchestrates a network operation and maintenance task for the network operation and maintenance intention by calling the large language model in the decision device 30, and executes the network operation and maintenance task by calling an application programming interface in a network management device 521 or 522. For the deployment manner 7, alternatively, a message processing device 22 may be deployed in each EMS/NMS in some other embodiments, and this is similar to the deployment manner 6. Correspondingly, for the deployment manner 6, alternatively, there may be no message processing device 22 in an EMS/NMS in some other embodiments, and this is similar to the deployment manner 7.

Any one of the deployment manner 5 to the deployment manner 7 is described by using an example in which a plurality of network management devices 50 are classified into network management devices of two management levels. In some other embodiments, the plurality of network management devices 50 may be alternatively classified into network management devices of more than two management levels. For network management devices of two adjacent management levels, a network management device of a higher management level is connected to a network management device of a lower management level. Herein, a quantity of management levels of network management devices is not limited in embodiments of this application. For multi-level network management devices, when management levels of the message processing devices 20 are not distinguished from each other (for example, in the deployment manner 5), the message processing device 20 may be connected to a network management device of a highest management level among the multi-level network management devices, or may be connected to network management devices of all levels, and execute a network operation and maintenance task by using a network management device 20 connected to the message processing device 20. When management levels of the message processing devices 20 are distinguished from each other (for example, in the deployment manner 6 or the deployment manner 7), a network management device 20 and a message processing device 20 of a same management level are deployed in a same subsystem, and the network management device 20 and the message processing device 20 of the same management level are connected to each other, so that the message processing device 20 calls the network management device 20 of the same management level.

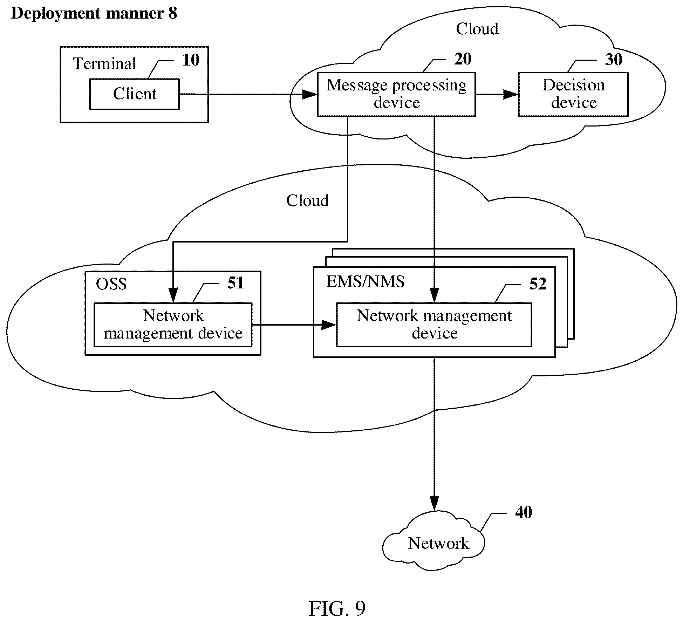

Any one of the deployment manner 1 to the deployment manner 7 is shown by using an example in which neither the OSS nor the EMS/NMS is deployed in a cloud. In some other embodiments, at least one of the OSS and the EMS/NMS in any deployment manner may be alternatively deployed in a cloud. The deployment manner 5 is used as an example in which the OSS and the EMSs/NMSs in the deployment manner 5 are deployed in a cloud, so that a deployment manner 8 shown in FIG. 9 is obtained.

Each of the message processing device 20, the model processor 30, and the network management device 50 may be implemented in a form of hardware, software, or a combination of software and hardware. Herein, implementations of the message processing device 20, the model processor 30, and the network management device 50 are not limited in embodiments of this application. The message processing device 20, the model processor 30, and the network management device 50 may be independently integrated into different computer devices, or at least two of the message processing device 20, the model processor 30, and the network management device 50 may be integrated into a same computer device. Herein, integration manners of the message processing device 20, the model processor 30, and the network management device 50 are not limited in embodiments of this application.

The following describes an implementation process of a network operation and maintenance method for the network operation and maintenance systems described above.

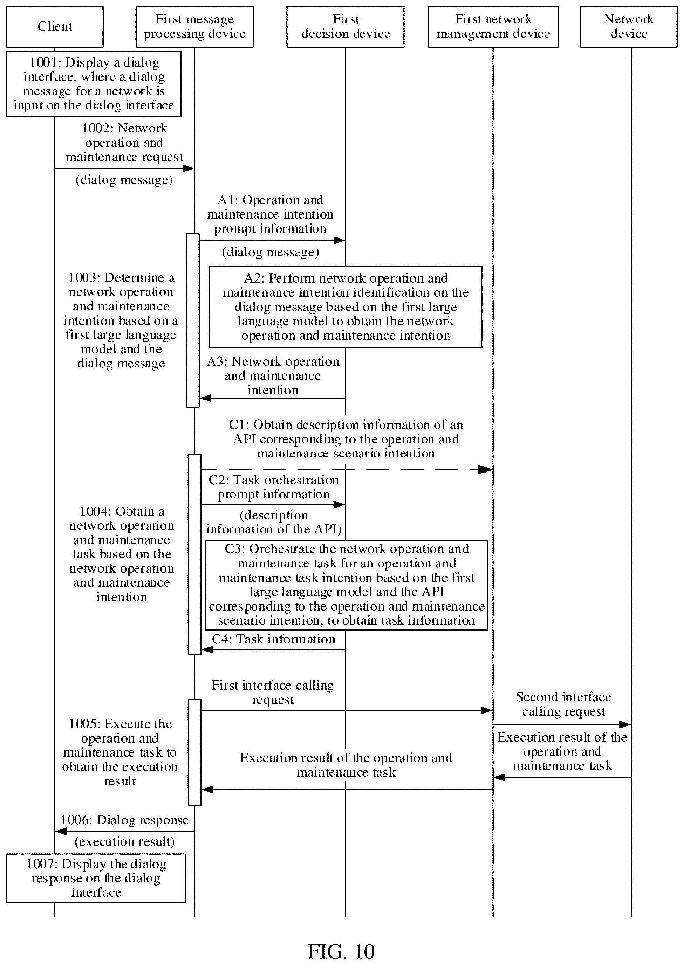

FIG. 10 is a flowchart of a large language model-based network operation and maintenance method according to an embodiment of this application. The method is applied to any network operation and maintenance system described above, and the method includes the following steps.

1001: A client displays a dialog interface, where a dialog message for a network is input on the dialog interface.

The client is any client 10 described above, and the network is the network 40 described above. The dialog message for the network indicates to execute a task related to network operation and maintenance. The dialog message is represented by a natural language or a structured statement. A manner of representing the dialog message is not limited in embodiments of this application. When the dialog message is represented by a natural language, it is convenient for a user to communicate with a network operation and maintenance system by using a natural language. This reduces difficulty of network operation and maintenance of the user.

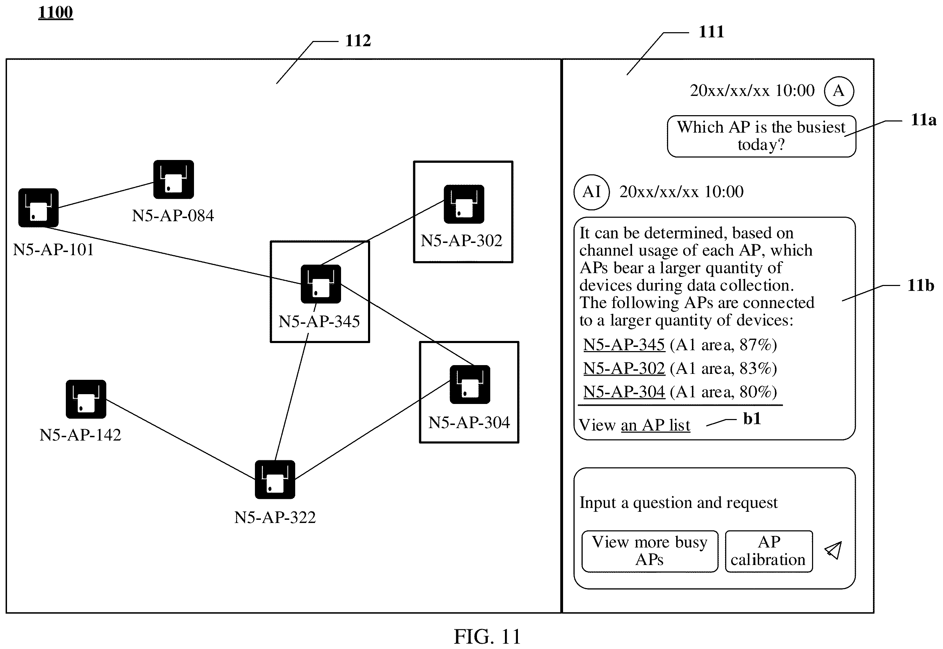

The dialog interface is a human-computer interaction interface provided by the client. For example, FIG. 11 is a diagram of a dialog interface according to an embodiment of this application. As shown in FIG. 11, the dialog interface 1100 includes a dialog window 111, and the dialog window 111 is configured to input and display a dialog message. It is assumed that the network includes a plurality of access points (access point, AP). As shown in FIG. 11, a user A inputs a dialog message 11a "which AP is the busiest today?" in the dialog window 111. When detecting the dialog message 11a, the client displays the dialog message 11a in the dialog window 1111.

FIG. 11 shows an example in which the input dialog message is question-type information. In some other embodiments, the dialog message is non-question-type information. For example, the dialog message is "detect whether a faulty AP exists in a network". In addition, FIG. 11 shows an example in which the input dialog message is text information. In some other embodiments, the user may alternatively input a voice-type dialog message.

1002: The client outputs a network operation and maintenance request to a first message processing device based on the dialog message, where the network operation and maintenance request indicates to execute a network operation and maintenance task on the network based on a network operation and maintenance intention of the dialog message.

The first message processing device is any message processing device that is in the network operation and maintenance system and that interworks with the client. When the network operation and maintenance system includes one message processing device, the first message processing device is the message processing device. When the network operation and maintenance system includes a plurality of message processing devices, if management levels of the plurality of message processing devices are not distinguished from each other, the first message processing device is any one of the plurality of message processing devices. If the plurality of message processing devices have different management levels, the first message processing device is a message processing device of a highest management level (for example, the message processing device 21 in FIG. 7 or FIG. 8) among the plurality of message processing devices.

The network operation and maintenance request includes the dialog message. When detecting the dialog message on the dialog interface, the client generates the network operation and maintenance request based on the dialog message, and outputs the network operation and maintenance request to the first message processing device. Correspondingly, the first message processing device receives the network operation and maintenance request, and performs the following step 1003 after receiving the network operation and maintenance request.

1003: The first message processing device obtains the dialog message in the network operation and maintenance request, and determines the network operation and maintenance intention based on a first large language model and the dialog message.

The network operation and maintenance intention is an intention that is of the user in terms of network operation and maintenance and that is identified from the dialog message, that is, an operation that the user expects to perform and that is related to the network operation and maintenance (namely, the network operation and maintenance task). The network operation and maintenance intention includes an operation and maintenance task intention and an operation and maintenance scenario intention. The operation and maintenance task intention indicates the network operation and maintenance task that the user expects to execute on the network. The operation and maintenance scenario intention is an operation and maintenance scenario of the network operation and maintenance task that the user expects to execute. Network operation and maintenance involves a plurality of operation and maintenance scenarios, such as a network planning scenario, a network construction scenario, a network maintenance scenario, a network optimization scenario, a network data query scenario, and a knowledge-based question answering scenario. The operation and maintenance scenario intention is any one of the plurality of operation and maintenance scenarios. The network planning scenario is an operation and maintenance scenario related to network planning. The network construction scenario is an operation and maintenance scenario related to network construction. The network optimization scenario is an operation and maintenance scenario related to network optimization. The network data query scenario is an operation and maintenance scenario in which network data is queried for, where the network data is, for example, configuration data, load data, or network link data of network devices. The knowledge-based question answering scenario is an operation and maintenance scenario in which a question about network operation and maintenance knowledge is asked.

The first large language model is a large language model that interworks with the first message processing device. The first large language model is deployed in the first message processing device and run by the first message processing device, or the first large language model is deployed in a decision device (referred to as a first decision device) and run by the first decision device. When the first large language model is deployed in the first decision device, the first message processing device identifies the network operation and maintenance intention of the dialog message by calling the first large language model, for example, the following step A1 to step A3.

Step A1: The first message processing device sends operation and maintenance intention prompt (prompt) information to the first decision device, where the operation and maintenance intention prompt information is used to prompt the first large language model to identify the network operation and maintenance intention of the dialog message.

The operation and maintenance intention prompt information includes the dialog message and description information of a plurality of operation and maintenance scenarios.

In a possible implementation, the first message processing device generates the operation and maintenance intention prompt information based on the dialog message and a second prompt statement, where the second prompt statement is used to prompt the large language model to identify the network operation and maintenance intention of the dialog message, and prompt the large language model to output the identified network operation and maintenance intention. For example, the second prompt statement is provided by an intention prompt template, and the first message processing device splices the dialog message and the description information of the plurality of operation and maintenance scenarios in the intention prompt template of the large language model, to obtain the operation and maintenance intention prompt information. The intention prompt template is a template used to prompt the first large language model to output the network operation and maintenance intention, and the intention prompt template includes a message field, a scenario field, and the second prompt statement. The message field is used to store the dialog message. The scenario field is used to store the description information of the plurality of operation and maintenance scenarios of the network. The second prompt statement is template content in the intention prompt template.

For example, the intention prompt template is {For a user question: X[], which of the following scenarios is involved? Return in a number form Y[]. What kind of tasks does the user want to execute. Return in a text form}. It is assumed that the dialog message is "which AP devices are the busiest today?", and there are a plurality of operation and maintenance scenarios such as network data query, network report viewing, and fault information viewing. The first message processing device fills the dialog message in the message field X[] of the intention prompt template, and fills description information of the plurality of operation and maintenance scenarios in the scenario field Y[], to obtain the following operation and maintenance intention prompt information through splicing:
{For a user question: which APs are the busiest today,
which of the following scenarios is involved? Return in a number form:
   0. others
   1. network query
   2. network report viewing
   3. fault information viewing
   What kind of tasks does the user want to execute? Return in a text form}.

After obtaining the operation and maintenance intention prompt information, the first message processing device sends the operation and maintenance intention prompt information to the first decision device.

Step A2: The first decision device receives the operation and maintenance intention prompt information, and performs network operation and maintenance intention identification on the dialog message based on the first large language model to obtain the network operation and maintenance intention.

The first decision device is a decision device connected to the first message processing device.

The first decision device inputs the operation and maintenance intention prompt information into the first large language model. The first large language model performs operation and maintenance scenario intention identification and operation and maintenance task intention identification on the dialog message based on a prompt of the operation and maintenance intention prompt information, and outputs the operation and maintenance scenario intention and the operation and maintenance task intention of the dialog message.

The example in step A1 is still used as an example. Assuming that the operation and maintenance scenario intention identified by the first large language model is the network data query scenario, the first large language model outputs a number "1" and the operation and maintenance task intention "determine, based on channel usage (channel usage) of each AP, which APs bear a larger quantity of devices during data collection".

Step A3: The first decision device outputs the network operation and maintenance intention to the first message processing device, and the first message processing device obtains the network operation and maintenance intention.

Based on step A1 to step A3, the network operation and maintenance intention of the dialog message is identified by calling the first large language model in the decision device, to reduce consumption of local computing power resources.

The foregoing step A1 to step A3 are described by using an example in which the network operation and maintenance intention is obtained by calling the first large language model once. In some other embodiments, the first message processing device obtains the network operation and maintenance intention by calling the first large language model for a plurality of times, for example, the following step B1 to step B4.

Step B1: The first message processing device sends scenario intention prompt information to the first decision device, where the scenario intention prompt information is used to prompt to call the first large language model to identify the operation and maintenance scenario intention of the dialog message.

The scenario intention prompt information includes the dialog message and description information of a plurality of operation and maintenance scenarios.

After obtaining the dialog message, the first message processing device splices the dialog message and the description information of the plurality of operation and maintenance scenarios in a scenario prompt template of the first large language model, to obtain the scenario intention prompt information. The scenario intention prompt template is a template used to prompt the first large language model to output the operation and maintenance scenario intention, and the scenario intention prompt template includes a message field, a scenario field, and a third prompt statement. The third prompt statement is template content in the scenario intention prompt template, and the third prompt statement is used to prompt the first large language model to output the operation and maintenance scenario intention of the dialog message.

For example, the scenario intention prompt template is {For a user question: X[], which of the following scenarios is involved? Return in a number form Y[]}. It is assumed that the dialog message is "which AP devices are the busiest today?", and there are a plurality of operation and maintenance scenarios such as network data query, network report viewing, and fault information viewing. The first message processing device fills the dialog message in the message field X[] of the scenario intention prompt template, and fills description information of the plurality of operation and maintenance scenarios in the scenario field Y[], to obtain the following scenario intention prompt information through splicing:
{For a user question: which APs are the busiest today,
which of the following scenarios is involved? Return in a number form:
   0. others
   1. network query
   2. network report viewing
   3. fault information viewing}.

After obtaining the scenario intention prompt information, the first message processing device sends the scenario intention prompt information to the first decision device.

Step B2: The first decision device receives the scenario intention prompt information, performs operation and maintenance scenario intention identification on the dialog message based on the first large language model to obtain the operation and maintenance scenario intention, and outputs the operation and maintenance scenario intention to the first message processing device; and the first message processing device receives the operation and maintenance scenario intention.

In a possible implementation, if determining, based on a prompt of the prompt statement in the scenario intention prompt information, that operation and maintenance scenario identification is to be performed on the dialog message, the first large language model identifies, based on a learned association relationship between a user question sample and an operation and maintenance scenario, an operation and maintenance scenario corresponding to the dialog message, and outputs a scenario classification label of the operation and maintenance scenario corresponding to the dialog message. The example in step B1 is still used as an example. Assuming that a scenario classification label of the network data query scenario is a number "1", and the operation and maintenance scenario intention identified by the first large language model is the network data query scenario, the first large language model outputs the number "1".

A user question sample is a dialog message used in a process of training the first large language model, and the first large language model learns the association relationship between a user question sample and an operation and maintenance scenario through training. The following describes, by using the following example, the process of training the first large language model to learn the association relationship:
For ease of description, a device for training the first large language model is referred to as a training device. The training device obtains scenario classification labels of a plurality of operation and maintenance scenarios, and each of the scenario classification labels indicates one operation and maintenance scenario. For example, each scenario classification label is a number of one operation and maintenance scenario, and different operation and maintenance scenarios have different numbers, that is, the numbers are scenario identifiers. For instance, a number of the knowledge-based question answering scenario is "1", and a number of a fault troubleshooting scenario is "2".

For each operation and maintenance scenario, the training device further obtains a query set of the operation and maintenance scenario. The query set includes a plurality of user question samples, and the plurality of user question samples are dialog messages related to the operation and maintenance scenario. For example, a query set of the knowledge-based question answering scenario includes three user question samples ["what is an AP", "what features does an AP have", and "how to configure an AP"]. For another example, a query set of the fault troubleshooting scenario includes three user question samples ["which APs are the busiest today", "how to check a quantity of AP connections", and "what to do if AP signals are unstable"]. Herein, an example in which the query set includes three user question samples is used for description. In a specific implementation process, the query set includes more than three or less than three user question samples. Herein, a quantity of user question samples in the query set is not limited in embodiments of this application.

For each operation and maintenance scenario, the training device adds a scenario classification label of the operation and maintenance scenario for each user question sample in a query set of the operation and maintenance scenario, to obtain a plurality of input sequences corresponding to the operation and maintenance scenario. Each input sequence includes one user question sample and the scenario classification label of the operation and maintenance scenario. A user question sample "what is an AP" is used as an example. A number "1" in a scenario classification label of the knowledge-based question answering scenario is added for the user question sample "what is an AP", to obtain an input sequence "what is an AP (1)".

After obtaining input sequences corresponding to a plurality of operation and maintenance scenarios, the training device inputs the input sequences corresponding to the plurality of operation and maintenance scenarios into the first large language model. The first large language model infers scenario classification labels of user question samples in the plurality of input sequences based on model parameters, to obtain an inferred scenario classification label; and adjusts the model parameters based on an error between the inferred scenario classification label and a scenario classification label in the input sequences, so that an error is reduced when next inference is performed based on adjusted model parameters. A process of adjusting model parameters is cyclically performed, so that the model parameters are gradually accurate. When training ends, an association relationship between a user question sample and a scenario classification label is learned by using the first large language model including the accurate model parameters, so that an accurate operation and maintenance scenario can be inferred. Based on the scenario classification labels of the user question samples in the input sequences, the first large language model can infer a corresponding scenario classification label. In this way, proper handling procedures are provided for different operation and maintenance scenarios. Because the scenario classification labels are used for marking, a problem that the first large language model confuses the scenario classification labels can also be effectively avoided.

When the first large language model is subsequently used, for example, in step B2, after the first large language model outputs the scenario classification label of the dialog message, the first decision device may return the scenario classification label to the first message processing device, and the first message processing device determines, based on a correspondence between a scenario classification label and an operation and maintenance scenario name, an operation and maintenance scenario name corresponding to the scenario classification label, to determine the operation and maintenance scenario intention of the dialog message. Alternatively, the first decision device determines, based on a correspondence between a scenario classification label and an operation and maintenance scenario name, an operation and maintenance scenario name corresponding to the scenario classification label, and returns the operation and maintenance scenario name to the first message processing device. In a possible implementation, the correspondence between a scenario classification label and an operation and maintenance scenario name may be recorded in a scenario classification dictionary. The scenario classification label output by the first large language model is decoded by using the scenario classification dictionary, to map the scenario classification label to the operation and maintenance scenario name. In this way, the operation and maintenance scenario name corresponding to the scenario classification label is determined. For example, if the scenario classification label output by the first large language model is "1", the operation and maintenance scenario name obtained through decoding is "knowledge-based question answering"; or if the scenario classification label output by the first large language model is "2", the operation and maintenance scenario name obtained through decoding is "fault troubleshooting".

Step B3: The first message processing device sends task intention prompt information to the first decision device based on the dialog message, where the task intention prompt information is used to prompt the first large language model to identify the operation and maintenance task intention that is of the dialog message and that is corresponding to the operation and maintenance scenario intention.

The task intention prompt information includes the dialog message and the operation and maintenance scenario intention.

After obtaining the operation and maintenance scenario intention, the first message processing device splices the dialog message and the operation and maintenance scenario intention in a task intention prompt template of the first large language model, to obtain the task intention prompt information. The task intention prompt template is a template used to prompt the first large language model to output the operation and maintenance task intention, and the task intention prompt template includes a message field, a scenario intention field, and a fourth prompt statement. The message field is used to store the dialog message. The scenario intention field is used to store the operation and maintenance scenario intention. The fourth prompt statement is template content in the task intention prompt template, and the fourth prompt statement is used to prompt the first large language model to output the operation and maintenance task intention that is of the dialog message and that is corresponding to the operation and maintenance scenario intention.

For example, the task intention prompt template is {For a user question: X[], what kind of tasks does the user want to execute in a scenario Y[]? Return in a text form}. It is assumed that the dialog message is "which AP devices are the busiest today?", and an operation and maintenance scenario intention is the network data query scenario. The first message processing device fills the dialog message in the message field X[] of the task intention prompt template, and fills the operation and maintenance scenario intention in the scenario intention field Y[], to obtain the following task intention prompt information through splicing:
{For a user question: "which AP devices are the busiest today",
what kind of tasks does the user want to execute in the network data query scenario? Return in a text form}.

After obtaining the task intention prompt information, the first message processing device sends the task intention prompt information to the first decision device.

In some other embodiments, for prompt information (for example, the operation and maintenance intention prompt information, the scenario intention prompt information, and the task intention prompt information) that includes the description information of the plurality of operation and maintenance scenarios, if the first large language model has learned the description information of the operation and maintenance scenarios, the scenario fields in the prompt templates corresponding to these pieces of prompt information belong to template content, and the description information of the plurality of operation and maintenance scenarios does not need to be spliced in the prompt templates during obtaining of the prompt information through splicing.

Step B4: The first decision device receives the task intention prompt information, performs operation and maintenance task intention identification on the dialog message based on the first large language model to obtain the operation and maintenance task intention, and outputs the operation and maintenance task intention to the first message processing device; and the first message processing device obtains the operation and maintenance task intention.

For example, the first decision device inputs the task intention prompt information into the first large language model. The first large language model performs operation and maintenance task intention identification corresponding to the operation and maintenance scenario intention on the dialog message based on a prompt of the task intention prompt information, and outputs the operation and maintenance task intention. The first decision device sends the operation and maintenance task intention to the first message processing device.

The first message processing device receives the operation and maintenance scenario intention and the operation and maintenance task intention of the dialog message, that is, obtains the network operation and maintenance intention of the dialog message.

1004: The first message processing device obtains the network operation and maintenance task based on the network operation and maintenance intention.

For the first message processing device, network operation and maintenance tasks of the network are classified into a network operation and maintenance task of a knowledge-based question answering type and a network operation and maintenance task of a non-knowledge-based question answering type. For the network operation and maintenance task of the knowledge-based question answering type, the first message processing device and a network management device do not need to interact with each other, and for the network operation and maintenance task of the non-knowledge-based question answering type, the first message processing device and the network management device need to interact with each other. Based on this, if the operation and maintenance scenario intention of the dialog message is the knowledge-based question answering scenario, the first message processing device determines the operation and maintenance task intention of the dialog message as the network operation and maintenance task of the knowledge-based question answering type, queries a knowledge base for information that can be used for answering the operation and maintenance task intention, and uses the found information as an execution result of the network operation and maintenance task.

If the operation and maintenance scenario intention of the dialog message is not the knowledge-based question answering scenario, the first message processing device obtains the network operation and maintenance task of the non-knowledge-based question answering type based on the network operation and maintenance intention and the first large language model. The following describes a process of obtaining the network operation and maintenance task of the non-knowledge-based question answering type.

For any one of the plurality of operation and maintenance scenarios other than the knowledge-based question answering scenario, the network management device of the network provides at least one application programming interface (application programming interface, API) for the operation and maintenance scenario. The API is used to complete a network operation and maintenance task in the operation and maintenance scenario, and different APIs are used to complete different network operation and maintenance tasks. A process of executing a network operation and maintenance task on the network is a process of calling an API in an operation and maintenance scenario to which the network operation and maintenance task belongs. Based on this, after obtaining the operation and maintenance task intention and the operation and maintenance scenario intention, the first message processing device orchestrates the network operation and maintenance task for the operation and maintenance task intention based on the first large language model and an API corresponding to the operation and maintenance scenario intention, to obtain task information. In this way, an execution process of the network operation and maintenance task is automatically orchestrated by using the first language model, and the user does not need to manually orchestrate the task. This simplifies a network operation and maintenance process, reduces difficulty of network operation and maintenance, and can improve network operation and maintenance efficiency.

The task information indicates a process of calling a corresponding API during execution of the network operation and maintenance task, and an API needed to complete the network operation and maintenance task or the operation and maintenance task intention is referred to as a first API. The first API may be all APIs corresponding to the operation and maintenance scenario intention, or may be some APIs corresponding to the operation and maintenance scenario intention, that is, there is at least one first API. The task information includes an output parameter of the at least one first API and an identifier of the at least one first API during execution of the network operation and maintenance task. When a plurality of first APIs are called, the task information further includes call sequences of the plurality of first APIs during execution of the network operation and maintenance task; or the task information does not include call sequences of the first APIs, and locations of input parameters/identifiers of the first APIs in the task information are used to indicate the call sequences of the first APIs. The task information is a call chain of the at least one first API. After the call chain is called, execution of the network operation and maintenance task is completed, and information output by the call chain is an execution result of the network operation and maintenance task.

When the first large language model is deployed in the first decision device, the first message processing device obtains the task information by calling the first large language model, for example, the following step C1 to step C4.

Step C1: The first message processing device obtains, from a first network management device, description information of the API corresponding to the operation and maintenance scenario intention.

The description information of the API includes functional description information and/or detection description information of the API. The functional description information describes a function of the API. The detection description information describes network data detected by the API in the network. The network data is, for example, load data or network link data of network devices. The network link data is, for example, a bandwidth, a delay, or channel usage. The API corresponding to the operation and maintenance scenario intention is each API corresponding to the operation and maintenance scenario intention, or the first API in the APIs that is corresponding to the operation and maintenance scenario intention.

Obtaining of description information of each API corresponding to the operation and maintenance scenario intention is used as an example. The first message processing device sends a first information obtaining request to the first network management device of the network. The first information obtaining request indicates to obtain the description information of each API corresponding to the operation and maintenance scenario intention, the first network management device is any network management device that is of the network and that is connected to the first message processing device, and the first information obtaining request includes an identifier of the operation and maintenance scenario intention. The first network management device receives the first information obtaining request, and outputs, based on the first information obtaining request, the description information of each API corresponding to the operation and maintenance scenario intention. For example, the first network management device calls, based on the first information obtaining request, each API corresponding to the operation and maintenance scenario intention, obtains the description information of each API from the API, and sends the description information of each API corresponding to the operation and maintenance scenario intention to the first message processing device.

Obtaining of description information of the first API corresponding to the operation and maintenance scenario intention is further used as an example. It is assumed that the operation and maintenance scenario intention is corresponding to APIs of a plurality of interface types, and there is at least one API of each interface type. The first message processing device first determines a first interface type from the APIs of the plurality of interface types, and then obtains the description information of the first API from the first network management device by using each API of the first interface type as the first API. The first interface type is an interface type to which the API needed by the operation and maintenance task intention belongs. The following step C11 to step C13 are used as an example.

C11: The first message processing device sends interface type prompt information to the first decision device based on the dialog message and the operation and maintenance scenario intention, where the interface type prompt information is used to prompt the first large language model to output the interface type that is needed to complete the operation and maintenance task intention of the dialog message and that is in the operation and maintenance scenario intention.

The interface type prompt information includes the dialog message/the operation and maintenance task intention, and the interface prompt information further includes the plurality of interface types corresponding to the operation and maintenance scenario intention.

The first message processing device splices the dialog message and the plurality of interface types corresponding to the operation and maintenance scenario intention in an interface prompt template of the first large language model, to obtain the interface prompt information. The interface prompt template is a template used to prompt the first large language model to output the interface type that is needed to complete the operation and maintenance task intention and that is in the operation and maintenance scenario intention. The interface prompt template includes a message field, an interface type field, and a fifth prompt statement. The message field is used to store the operation and maintenance task intention. The interface type field is used for the plurality of interface types corresponding to the operation and maintenance scenario intention. The fifth prompt statement is template content in the interface prompt template, and the fifth prompt statement is used to prompt the first large language model to output the interface type that is needed to complete the operation and maintenance task intention and that is in the operation and maintenance scenario intention.

For example, the interface prompt template is {Which of the following interface types is used to select an API to answer a question "{X[]}". Return in a number form Y[] }. It is assumed that the operation and maintenance scenario intention is the network data query scenario, and the network data query scenario is corresponding to a plurality of interface types about an AP device, a switch device, a gateway device, and the like. After the network data query scenario is determined, the first message processing device fills query (that is, the operation and maintenance task intention or the dialog message) in the message field X[] of the interface prompt template, and fills the plurality of interface types corresponding to the network data query scenario in the interface type field Y[], to obtain the following interface type prompt information through splicing:
{Which of the following categories is used to select an API to answer a question "{query}"? Return in a number form:
1. about an AP device
2. about a switch device
3. about a gateway device}.

After obtaining the interface type prompt information, the first message processing device sends the interface type prompt information to the first decision device.

C12: The first decision device receives the interface type prompt information, predicts, based on the first large language model, the interface type needed to complete the operation and maintenance task intention, to obtain the first interface type, and sends the first interface type to the first message processing device.

For example, the first decision device inputs the interface type prompt information into the first large language model. The first large language model determines, based on the prompt of the task intention prompt information, the first interface type from the plurality of interface types corresponding to the operation and maintenance scenario intention, and outputs the first interface type. The first decision device sends the first interface type to the first message processing device. The interface type prompt information in C11 is still used as an example. Assuming that the first interface type determined by the first large language model is an interface type about an AP device, the first large language model outputs a number "1", and the first decision device returns the interface type " 1 " to the first dialog processor.

C13: The first message processing device receives the first interface type, and obtains the description information of the first API of the first interface type from the first network management device.

The first message processing device sends a second information obtaining request to the first network management device. The second information obtaining request indicates to obtain the description information of the API of the first interface type corresponding to the operation and maintenance scenario intention, and the second information obtaining request includes the identifier of the operation and maintenance scenario intention and the first interface type. The first network management device receives the second information obtaining request, and outputs, based on the second information obtaining request, the description information of each API corresponding to the first interface type. For example, the first network management device calls, based on the second information obtaining request, each API of the first interface type corresponding to the operation and maintenance scenario intention, obtains the description information of each API of the first interface type from the API of the first interface type, and sends the description information of each API of the first interface type to the first message processing device. The first message processing device receives the description information of each API (namely, the first API) of the first interface type.

The first information obtaining request and the second information obtaining request are different information obtaining requests, and are both used to obtain the description information of the API of the operation and maintenance scenario intention. Based on the foregoing step C1, the description information of the API of the operation and maintenance scenario intention is obtained from the network management device, so that the first large language model can orchestrate an appropriate network operation and maintenance task based on the description information of the API of the operation and maintenance scenario intention, thereby improving reasonableness of the orchestrated network operation and maintenance task.

The foregoing step C1 is described by using an example in which the first message processing device obtains the description information of the API of the operation and maintenance scenario intention from the network management device. In some other embodiments, the first message processing device stores the description information of the API of the operation and maintenance scenario intention. In this case, the first message processing device does not need to obtain the description information of the API corresponding to the operation and maintenance scenario intention from the first message processing device. For example, the first message processing device stores description information of APIs of various operation and maintenance scenarios. If a scenario intention of the dialog message is the operation and maintenance scenario intention, description information of an API of the scenario intention is obtained from the locally stored description information of the APIs of the plurality of operation and maintenance scenarios, and the detection description information of the API corresponding to the operation and maintenance scenario intention does not need to be obtained from the first network management device. Therefore, step C1 is an optional step, and step C1 is represented by a dashed line in the accompanying drawing. In some embodiments, the first message processing device stores scenario information of various operation and maintenance scenarios. Scenario information of an operation and maintenance scenario includes scenario description information of the operation and maintenance scenario, description information of an API, and a prompt template related to the operation and maintenance scenario, so that the first message processing device can locally obtain these pieces of information when necessary.

Step C2: The first message processing device sends task orchestration prompt information to the first decision device based on the description information of the API corresponding to the operation and maintenance scenario intention, where the task orchestration prompt information is used to prompt the first large language model to orchestrate the network operation and maintenance task for the operation and maintenance task based on the API corresponding to the operation and maintenance scenario intention.

The task orchestration prompt information includes the operation and maintenance task intention and the description information of the API corresponding to the operation and maintenance scenario intention.

In a possible implementation, the first message processing device generates the task orchestration prompt information based on the operation and maintenance task intention, a first prompt statement, and the description information of the API corresponding to the operation and maintenance scenario intention, where the first prompt statement is used to prompt the large language model to orchestrate the network for the operation and maintenance task intention based on the API corresponding to the operation and maintenance scenario intention, and prompt the large language model to output the task information of the orchestrated network operation and maintenance task. For example, the first prompt statement is provided by a task orchestration prompt template of the large language model, and the first message processing device splices the operation and maintenance task intention and the description information of the API corresponding to the operation and maintenance scenario intention in the task orchestration prompt template, to obtain the task orchestration prompt information. The task orchestration prompt template is a template used to prompt the first large language model to orchestrate the network operation and maintenance task, and the task orchestration prompt template includes a message field, a description field, and the second prompt statement. The message field is used to store the operation and maintenance scenario intention. The description field is used to store the description information of the API corresponding to the operation and maintenance scenario intention. The second prompt statement is template content in the task orchestration prompt template.

For example, the API corresponding to the operation and maintenance scenario intention is each API corresponding to the operation and maintenance scenario intention. It is assumed that the task orchestration prompt template is { {X[]} about these API descriptions}, which API needs to be called by {Y[]}, and what parameters need to be transferred? Directly give an answer, and do not provide an analysis process}. The first message processing device fills query (that is, the operation and maintenance task intention or the dialog message) in the message field X[] of the task orchestration prompt template, and fills the operation and maintenance task intention (that is, the description information of the API corresponding to the operation and maintenance scenario intention) in the description field Y[], to obtain the following task orchestration prompt information through splicing:
{ {For the operation and maintenance task intention of API descriptions about an AP},
which API needs to be called by {query}, and what parameters need to be transferred? Directly give an answer, and do not provide an analysis process}.

After obtaining the task orchestration prompt information, the first message processing device sends the task orchestration prompt information to the first decision device.

Step C3: The first decision device receives the task orchestration prompt information, and orchestrates the network operation and maintenance task for the operation and maintenance task intention based on the first large language model and the API corresponding to the operation and maintenance scenario intention, to obtain the task information.

The first decision device inputs the task orchestration prompt information into the first large language model. The first large language model determines the first APIs that are in the operation and maintenance scenario intention and that are used to complete the operation and maintenance intention, and the call sequences and the input parameters of the first APIs based on a prompt of the task orchestration prompt information, the operation and maintenance task intention, and the description information of the API corresponding to the operation and maintenance scenario intention, and orchestrates the execution process of the network operation and maintenance task based on the call sequences and the input parameters of the first APIs, to output the task information. The task information includes the input parameters and the call sequences of the APIs. If a same first API is called for a plurality of times, the task information further includes a call sequence of calling the first API each time.

In a possible implementation, the operation and maintenance task intention includes a plurality of operation and maintenance task sub-intentions. Correspondingly, the network operation and maintenance task corresponding to the operation and maintenance task intention includes a plurality of network operation and maintenance subtasks, the plurality of operation and maintenance task sub-intentions are corresponding to different network operation and maintenance subtasks, and the network operation and maintenance subtasks are used to complete corresponding operation and maintenance task sub-intentions.

When the operation and maintenance task intention includes the plurality of operation and maintenance task sub-intentions, the first decision device separately orchestrates network operation and maintenance subtasks for the plurality of network operation and maintenance subtasks based on the first large language model and the API corresponding to the operation and maintenance scenario intention, to obtain a plurality of pieces of subtask information, and obtains the task information based on the plurality of pieces of subtask information. In this case, the task information includes the plurality of pieces of subtask information, and the subtask information indicates a process of calling the at least one first API during execution of the network operation and maintenance subtask. When a plurality of first APIs need to be called for the network operation and maintenance subtask, the subtask information further includes the call sequences of the plurality of first APIs during execution of the network operation and maintenance subtask; or the subtask information does not include the call sequences of the first APIs, and locations of the input parameters of the first APIs in the subtask information are used to indicate the call sequences of the first APIs. The subtask information is a call chain of the at least one first API. After the call chain is called, execution of the network operation and maintenance subtask is completed, and information output by the call chain is an execution result of the network operation and maintenance subtask.

For example, the first decision device inputs the task orchestration prompt information into the first large language model. The first large language model determines, based on the prompt of the task orchestration prompt information, the plurality of operation and maintenance task sub-intentions, and the description information of the API corresponding to the operation and maintenance scenario intention, the first APIs needed to complete the operation and maintenance task sub-intentions, and the call sequences and the input parameters that are of the first APIs and that are present when the operation and maintenance task sub-intentions are completed, generates the plurality of pieces of subtask information (to orchestrate the network operation and maintenance subtasks) based on the call sequences and the input parameters, and outputs the task information based on the plurality of pieces of subtask information. Each piece of subtask information in the task information indicates one network operation and maintenance subtask.

When the network operation and maintenance task includes the plurality of network operation and maintenance subtasks, it is difficult to manually orchestrate the network operation and maintenance task, and the user needs to well understand each application programming interface of the network. The network operation and maintenance task is automatically orchestrated by using the first language model, and the user does not need to manually orchestrate the task. This simplifies a network operation and maintenance process, reduces difficulty of network operation and maintenance, and can improve network operation and maintenance efficiency.

Step C4: The first decision device outputs the task information to the first message processing device, and the first message processing device receives the task information.

That the first message processing device receives the task information is that the first message processing device obtains the network operation and maintenance task. Based on the foregoing step C2 to step C4, the network operation and maintenance task is orchestrated by calling the first large language model in the first decision device, to reduce consumption of local computing power resources of the first message processing device.

1005: The first message processing device executes the network operation and maintenance task to obtain the execution result.

The first message processing device executes the network operation and maintenance task based on the task information. With reference to FIG. 10, when one first API is needed to complete the network operation and maintenance task, the task information includes input data of the first API. The first message processing device sends a first interface calling request to the first network management device based on the input data of the first API. The first interface calling request indicates to call the first API, to execute the network operation and maintenance task, and the first interface calling request includes the input data of the first API. After receiving the first interface calling request, the first network management device inputs the input data of the first API into the first API, and runs the first API. The first API sends a second interface calling request to a network device in the network. The second interface calling request indicates to call a second API of the network device, to obtain the execution result of the network operation and maintenance task, and the second API is an API between the first network management device and the network device. After receiving the second interface calling request, the network device runs the second API based on the second interface calling request, to obtain the execution result of the network operation and maintenance task, and returns the execution result of the network operation and maintenance task to the first API. The first API outputs the execution result of the network operation and maintenance task. The first network management device sends an interface calling response to the first message processing device based on the execution result of the network operation and maintenance task, where the interface calling response includes the execution result of the network operation and maintenance task. After receiving the interface calling response, the first message processing device obtains the execution result of the network operation and maintenance task from the interface calling response.

When a plurality of first APIs need to be called for the network operation and maintenance task, the first network management device sequentially calls the plurality of first APIs in the first network management device based on the call sequences of the first APIs in the task information, and uses data output by a last called first API as the execution result of the network operation and maintenance task. For a process of calling each first API, refer to the foregoing process of calling one first API. Details are not described herein again.

The foregoing is described by using an example in which a first API in one first network management device is called during execution of the network operation and maintenance task. In some other embodiments, the first message processing device executes the network operation and maintenance task by calling first APIs in a plurality of first network management devices. The deployment manner 2 shown in FIG. 3 is used as an example. The message processing device 20 in the OSS is the first message processing device, and the network management devices 50 in the plurality of EMSs/NMSs are all first network management devices. When the network operation and maintenance task includes the plurality of network operation and maintenance subtasks, the message processing device 20 executes different task subtasks by calling first APIs in different network management devices 50, to obtain execution results of the plurality of network operation and maintenance subtasks.

For example, the message processing device 20 sequentially executes the plurality of network operation and maintenance subtasks based on an execution sequence of the plurality of network operation and maintenance subtasks. Execution of any network operation and maintenance subtask is used as an example. The message processing device 20 executes the operation and maintenance subtask based on subtask information of the network operation and maintenance subtask. For example, when one first API is needed to complete the network operation and maintenance subtask, the task information includes input data of the first API. The first message processing device sends a third interface calling request to a network management device 50 based on the input data of the first API. The third interface calling request indicates to call the first API, to execute the network operation and maintenance subtask, and the third interface calling request includes the input data of the first API. After receiving the third interface calling request, the first network management device inputs the input data of the first API into the first API, and runs the first API. In a process of running the first API, the network management device 30 sends a fourth interface calling request to the network device in the network. The fourth interface calling request indicates to call the second API of the network device, to obtain an execution result of the network operation and maintenance subtask. After receiving the fourth interface calling request, the network device runs the second API based on the fourth interface calling request, to obtain the execution result of the network operation and maintenance subtask, and returns the execution result of the network operation and maintenance subtask to the first API of the first network management device. The first API outputs the execution result of the network operation and maintenance subtask. The network management device 50 sends an interface calling response to the first message processing device based on the execution result of the network operation and maintenance subtask, where the interface calling response includes the execution result of the network operation and maintenance subtask. After receiving the interface calling response, the first message processing device obtains the execution result of the network operation and maintenance subtask from the interface calling response.

After obtaining the execution results of the plurality of network operation and maintenance subtasks, the message processing device 20 obtains the execution result of the network operation and maintenance task based on the execution results of the plurality of network operation and maintenance subtasks. For example, the plurality of network operation and maintenance subtasks of the network operation and maintenance task may be in parallel or in series. Input data and output data of a plurality of parallel network operation and maintenance subtasks do not affect each other, and input data of each network operation and maintenance subtask in a plurality of serial network operation and maintenance subtasks other than a 1^{st} network operation and maintenance subtask is output data of a previous network operation and maintenance subtask. Based on this, when the network operation and maintenance task includes a plurality of parallel network operation and maintenance subtasks, the message processing device 20 uses execution results of the plurality of network operation and maintenance subtasks as the execution result of the network operation and maintenance task. When the network operation and maintenance task includes a plurality of serial network operation and maintenance subtasks, the first message processing device first executes the 1^{st} network operation and maintenance subtask in the plurality of network operation and maintenance subtasks by calling an API in a network management device 50, and uses an execution result of the 1^{st} network operation and maintenance subtask as input data of a 2^{nd} network operation and maintenance subtask; executes the 2^{nd} network operation and maintenance subtask by calling the API in the network management device 50 or an API in another network management device 50, and uses an execution result of the 2^{nd} network operation and maintenance subtask as input data of a 3^{rd} network operation and maintenance subtask; executes the 3^{rd} network operation and maintenance subtask by calling the API in the network management device 50 or an API in another network management device 50, and so on, until execution of a last network operation and maintenance subtask is completed; and uses an execution result of the last network operation and maintenance subtask as the execution result of the network operation and maintenance task. Certainly, the network operation and maintenance task may alternatively include a plurality of parallel network operation and maintenance subtasks and a plurality of serial network operation and maintenance subtasks. The message processing device uses execution results of the plurality of parallel network operation and maintenance subtasks and an execution result of a last network operation and maintenance subtask in the plurality of serial network operation and maintenance subtasks as the execution result of the network operation and maintenance task.

For each network management device in the operation and maintenance network, the network operation and maintenance task and the network operation and maintenance subtasks are all network operation and maintenance tasks to be processed by the first message processing device (referred to as first network operation and maintenance tasks). Both the first interface calling request and the third interface calling request are interface calling requests received by the network management device, and indicate to call the API of the network management device, to execute a first network operation and maintenance subtask. The foregoing is described by using an example in which the network management device proactively returns the execution results of the first network operation and maintenance tasks to the first message processing device after executing the first network operation and maintenance tasks, and the interface calling requests in this case are synchronous instructions delivered by the first message processing device. In some other embodiments, the interface calling requests delivered by the first message processing device to the network management device are asynchronous instructions. In this case, after completing execution of the first network operation and maintenance tasks based on the interface calling requests, the network management device does not proactively report the execution results of the first network operation and maintenance tasks to the first message processing device, and waits for the first message processing device to proactively query the network management device for the execution results of the first network operation and maintenance tasks. Herein, a manner in which the first message processing device obtains the execution results of the first network operation and maintenance tasks is not limited in embodiments of this application.

In step 1005, the first session processor executes the network operation and maintenance task, and operation and maintenance instructions do not need to be manually delivered to the network management device. This simplifies a network operation and maintenance process, reduces difficulty of network operation and maintenance, and can improve network operation and maintenance efficiency.

After obtaining the execution result of the network operation and maintenance task, the first message processing device sends a dialog response of the dialog message to the client based on the execution result (that is, step 1006). Alternatively, if the execution result is an execution result represented by a programming language, to make the user easily understand the execution result of the network operation and maintenance task, the first message processing device converts the execution result of the network operation and maintenance task represented by the programming language into at least one of a natural language, a graph, and a network topology view based on the first large language model. The first message processing device sends the dialog response to the client based on an execution result obtained through format conversion.

For example, a process of converting a format of the execution result may be as follows: The first message processing device splices the execution result represented by the programming language into a format conversion prompt template to obtain format conversion prompt information, and sends the format conversion prompt information to the first decision device. The format conversion prompt information is used to prompt the first large language model to convert the execution result represented by the programming language into the at least one of a natural language, a graph, or a network topology view. After receiving the format conversion prompt information, the first decision device inputs the format conversion prompt information into the first large language model. The first large language model converts the execution result represented by the programming language into the at least one of a natural language, a graph, or a network topology view based on a prompt of the format conversion prompt information, and outputs the execution result obtained through format conversion. The first decision device returns the converted execution result to the first message processing device.

1006: The first message processing device outputs the dialog response of the dialog message to the client based on the execution result of the network operation and maintenance task.

The dialog response includes the execution result of the network operation and maintenance task and the network operation and maintenance intention, or the dialog response includes the execution result of the network operation and maintenance task but does not include the network operation and maintenance intention.

For example, if a semantic similarity between the network operation and maintenance intention and the dialog message is greater than a similarity threshold, the dialog message can be used as the network operation and maintenance intention. In this case, the first message processing device sends the execution result of the network operation and maintenance task used as the dialog response to the client. If a semantic similarity between the network operation and maintenance intention and the dialog message is less than or equal to a similarity threshold, the first message processing device sends the execution result of the network operation and maintenance task and the network operation and maintenance intention that are used as the dialog response to the client, to inform the user of the network operation and maintenance task corresponding to the execution result of the network operation and maintenance task.

1007: The client receives the dialog response, and displays the dialog response on the dialog interface.

The dialog interface 1100 shown in FIG. 11 is used as an example. The dialog window 111 is further configured to display an execution result represented by a natural language. The dialog interface 100 further includes an information presentation window 112. The information presentation window 112 is configured to display an execution result represented by using a graph and/or a network topology view. Based on this, after receiving the dialog response, the client displays a reply message 11b in the dialog window 111 based on the dialog response. The reply message 11b includes text content (for example, a network operation and maintenance intention and/or an execution result of a network operation and maintenance task) in the dialog response With reference to FIG. 11, the reply message 11b includes the network operation and maintenance intention represented by a natural language "it can be determined, based on channel usage of each AP, which APs bear a larger quantity of devices during data collection" and the execution result of the network operation and maintenance task represented by a natural language "for example, N5-AP-345 (A1 area, 87%), N5-AP-302 (A1 area, 83%), and N5-AP-304 (A1 area, 80%)". If the dialog response further includes an execution result represented by a graph or a network topology, the execution result represented by the graph or the network topology is presented in the information presentation window 112. FIG. 11 is still used as an example. Assuming that the dialog response further includes the execution result represented by the network topology, the client displays the network topology (a global network topology or a local network topology) of the network in the information presentation window 112, and highlights, in the network topology, a network device related to the execution result. As shown in FIG. 11, a manner of highlighting the network device related to the execution result is displaying the related network device in a square box. Certainly, there may be alternatively other highlighting manners. For example, the related network device is displayed in a color different from other network devices, or the related network device is marked by using a specific mark. Herein, the manner of highlighting the related network device is not limited in embodiments of this application. The execution results represented by the natural language, the graph, or the network topology are displayed on the dialog interface 1100, so that the user easily understands the execution result of the network operation and maintenance task.

In some other embodiments, if there is a large amount of content of an execution result represented by a natural language, the client may further display, in the reply message in a folded manner, the execution result represented by the natural language. For example, the client displays a part of the execution result and a view option b1 in the reply message, and the client displays the rest of the execution result in response to a selection operation on the view option.

In some other embodiments, the information presentation window 112 may further display information related to the network together with the dialog window 111. For example, a device icon in the network topology displayed in the information presentation window 112 further supports data query. When the client detects a selection operation performed by the user on any device identifier, the client displays, in the dialog window 111, network data and/or configuration data of a network device indicated by the device icon, so that richer information can be presented to the user.

To clearly display the graph or the network topology in the information presentation window 112, a size of the information presentation window 112 is greater than a size of the dialog window 111. The dialog interface 100 provides the dialog window 111 and the information presentation window 112, so that a human-computer dialog can be conveniently implemented, and a variety of information of the network is graphically presented. In this way, rich information can be presented to the user, and the user easily understands the presented information.

In the method provided in the embodiment shown in FIG. 10, the network operation and maintenance intention of the user is identified from the dialog message of the user by using the large language model, to establish, based on the network operation and maintenance intention, the network operation and maintenance task that the user expects to execute on the network. After execution of the network operation and maintenance task is completed, the execution result of the network operation and maintenance task is provided for the client. In this process, the user only needs to provide the dialog message in a form of dialog, and does not need to interact with the client for a plurality of times. This simplifies an operation procedure for network operation and maintenance, and can improve network operation and maintenance efficiency. According to the method provided in this embodiment of this application, a final question and answer result can be provided for the user with regard to dialog messages in a plurality of operation and maintenance scenarios, and therefore operation and maintenance scenarios are not limited; and an operation and maintenance service can be provided for the user in various operation and maintenance scenarios, and therefore dependency of the user on the network operation and maintenance system can be increased and user stickiness of the network operation and maintenance system can be improved.

The embodiment shown in FIG. 10 is described by using an example in which the dialog response includes the network operation and maintenance intention and the execution result of the network operation and maintenance task. In some other embodiments, the dialog response further includes a predicted intention. The predicted intention is a predicted dialog intention of a next dialog message of the current dialog message, and the predicted intention can also be understood as a predicted next action of the user. The next action may be an operation and maintenance action, or may be a question related to a knowledge-based question answering. Therefore, the predicted intention may be a network operation and maintenance intention, or may be a knowledge-based question answering intention. There is at least one predicted intention. After obtaining the execution result of the network operation and maintenance task corresponding to the dialog message, the first message processing device obtains the predicted intention of the dialog message based on the first large language model and the network operation and maintenance intention of the dialog message.

When the first large language model is deployed in the first decision device, the first message processing device obtains the predicted intention of the dialog message by calling the first large language model, for example, the following step D1 to step D3.

D1: The first message processing device sends prediction prompt information to the first decision device, where the prediction prompt information is used to prompt the first large language model to predict the dialog intention of the next dialog message based on the network operation and maintenance intention.

The prediction prompt information includes the network operation and maintenance intention.

The first message processing device splices the network operation and maintenance intention in a prediction prompt template of the first large language model, to obtain the prediction prompt information. The prediction prompt template is used to prompt the first large language model to predict the dialog intention of the next dialog message, and the prediction prompt template includes an intention field and a sixth prompt statement. The intention field is used to store the network operation and maintenance intention. The sixth prompt statement is template content in the prediction prompt template, and the sixth prompt statement is used to prompt the first large language model to predict the dialog intention of the next dialog message.

For example, the prediction prompt template is {For a question {X[]}, what kind of tasks does the user want to execute next? Return in a text form}. It is assumed that the network operation and maintenance intention is "determine, based on channel usage of each AP, which APs bear a larger quantity of devices during data collection". The first message processing device fills the network operation and maintenance intention in the intention field X[] of the prediction prompt template, to obtain the following prediction prompt information through splicing:
{For a question { determine, based on channel usage of each AP, which APs bear a larger quantity of devices during data collection},
what kind of tasks does the user want to execute next? Return in a text form}.

After obtaining the prediction prompt information, the first message processing device sends the prediction prompt information to the first decision device.

D2: The first decision device receives the prediction prompt information, and predicts the dialog intention of the next dialog message of the dialog message based on the first large language model, to obtain the predicted intention.

For example, the first decision device inputs the prediction prompt information into the first large language model. The first large language model predicts the dialog intention of the next dialog message based on a prompt of the prediction prompt information and the network operation and maintenance intention, and outputs the predicted intention. The example in step D1 is still used as an example. Two output predicted intentions are "view more busy APs" and "AP calibration".

D3: The first decision device outputs the predicted intention to the first message processing device, and the first message processing device obtains the predicted intention.

After obtaining the predicted intention, the first message processing device generates the dialog response based on the predicted intention and at least one of the execution result of the network operation and maintenance task and the network operation and maintenance intention, and sends the dialog response to the client. As shown in FIG. 11, the dialog window 111 further includes a navigation bar 11c. After receiving the dialog response, the client separately displays, by using recommended navigation options c1 and c2 in the navigation bar 11c, the predicted intentions "view more busy APs" and "AP calibration" in the dialog response. Correspondingly, if the user performs a selection operation on either of the recommended navigation options c1 and c2, the client notifies, in response to the selection operation, the first message processing device to process the predicted intentions displayed by using the recommended navigation options, and the user does not need to input a new dialog message to indicate a next action. This further simplifies an operation procedure for network operation and maintenance, and can improve network operation and maintenance efficiency.

In some other embodiments, after completing the network operation and maintenance task of the dialog message, the first message processing device further analyzes a potential network operation and maintenance intention of the dialog message by using the first large language model, and generates a network operation and maintenance task (that is, a related network operation and maintenance task of the dialog message) for the potential network operation and maintenance intention. The potential network operation and maintenance intention is an intention related to a dialog intention of the dialog message, and may be a related network operation and maintenance intention or a related knowledge-based question answering intention. The related network operation and maintenance task is the network operation and maintenance task generated for completing the potential network operation and maintenance intention, and the related network operation and maintenance task is related to the network operation and maintenance task of the dialog message. The first message processing device executes an execution result of the related network operation and maintenance task, and adds both the execution result of the network operation and maintenance task and the execution result of the related network operation and maintenance task of the dialog message to the dialog response, so that the client displays the execution result of the network operation and maintenance task and the execution result of the related network operation and maintenance task on the dialog interface. In this way, a service of intelligently executing the network operation and maintenance task is provided for the user, and user experience can be improved.

In some other embodiments, in a process of generating the network operation and maintenance task based on the first large language model, if critical information (for example, input data of an API) for generating the network operation and maintenance task is missing, the first message processing device sends a supplementary prompt message to the client. The supplementary prompt message is used to prompt the user to supplement the critical information. The client displays the supplementary prompt message, and the user may supplement the crucial information in the next dialog message, the first message processing device generates the network operation and maintenance task based on the first large language model and the crucial information.

The embodiment shown in FIG. 10 is described by using an example in which the first message processing device obtains the network operation and maintenance task. In some other embodiments, in a network operation and maintenance system having multi-level message processing devices, if the operation and maintenance scenario intention is not the knowledge-based question answering scenario and the operation and maintenance task intention includes a plurality of operation and maintenance task sub-intentions, the first message processing device does not create a network operation and maintenance task, and distributes the plurality of operation and maintenance task sub-intentions to a message processing device of a next management level. The message processing device of the next management level completes each operation and maintenance task sub-intention.

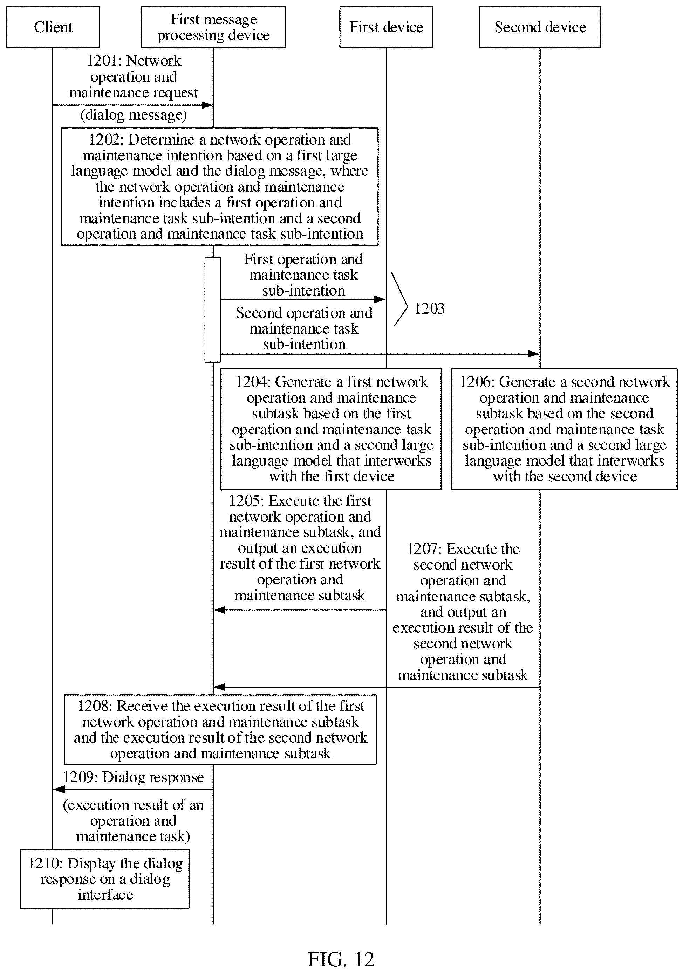

For example, it is assumed that the first message processing device is corresponding to a plurality of next-level message processing devices, and the next-level message processing devices are referred to as second message processing devices. Management levels of the plurality of second message processing devices are the same, and the management levels of the second message processing devices are lower than a management level of the first message processing device. In other words, the first message processing device is an upper-level manager of the plurality of second message processing devices. FIG. 7 or FIG. 8 is used as an example. The first message processing device is the message processing device 21 in FIG. 7 or FIG. 8, and the plurality of second message processing devices are the message processing devices 22 in FIG. 7 or FIG. 8. For example, the operation and maintenance task intention includes a first operation and maintenance task sub-intention and a second operation and maintenance task sub-intention, and a first device and a second device in the plurality of second message processing devices complete the first operation and maintenance task sub-intention and the second operation and maintenance task sub-intention, respectively. Refer to FIG. 12, which is a flowchart of another large language model-based network operation and maintenance method according to an embodiment of this application. The method includes the following steps.

1201: A client outputs a network operation and maintenance request to a first message processing device, where the network operation and maintenance request indicates to execute a network operation and maintenance task on a network based on a network operation and maintenance intention of a dialog message.

Step 1201 is similar to step 1002, and step 1201 is not described herein again.

1202: The first message processing device obtains the dialog message in the network operation and maintenance request, and determines the network operation and maintenance intention based on a first large language model and the dialog message, where the network operation and maintenance intention includes the first operation and maintenance task sub-intention and the second operation and maintenance task sub-intention.

Step 1202 is similar to step 1003, and step 1202 is not described herein again.

1203: The first message processing device sends the first operation and maintenance task sub-intention to the first device, and sends the second operation and maintenance task sub-intention to the second device.

The first device is any one of the plurality of second message processing devices, and the second device is any one of the plurality of second message processing devices other than the first device.

1204: The first device obtains the first operation and maintenance task sub-intention, and generates a first network operation and maintenance subtask based on the first operation and maintenance task sub-intention and a second large language model that interworks with the first device.

The second large language model that interworks with the first device is a large language model running in the first device or a large language model running in a decision device. If the second large language model is a large language model running in the decision device, when the first message processing device and the first device are connected to a same decision device, the second large language model and the first large language model are a same model. For example, in FIG. 8, both the first large language model and the second large language model are a large language model in the decision device 30. When the first message processing device and the first device are connected to different decision devices, the second large language model and the first large language model are not a same model. For example, in FIG. 7, the first large language model is a large language model in the decision device 31, and the second large language model is a large language model in the decision device 32 connected to the first device. In this case, the second large language model and the first large language model are two large language models that have functions correlated with each other.

When sending the first operation and maintenance task sub-intention to the first device, the first message processing device also sends an operation and maintenance scenario intention in the network operation and maintenance intention to the first device, so that the second message processing device orchestrates a network operation and maintenance task (that is, the first network operation and maintenance subtask) for the operation and maintenance task sub-intention based on the second large language model and an API corresponding to the operation and maintenance scenario intention, to obtain subtask information of the first network operation and maintenance subtask.

When the second large language model is deployed in a second decision device, the first device orchestrates the first network operation and maintenance subtask for a first network operation and maintenance sub-intention by calling the second large language model, for example, the following step E1 to step E3.

Step E1: The first device sends subtask orchestration prompt information to the second decision device, where the subtask orchestration prompt information is used to prompt the large language model to orchestrate the network operation and maintenance subtask for the operation and maintenance task sub-intention based on the API corresponding to the operation and maintenance scenario intention, and prompt the large language model to output subtask information of the orchestrated network operation and maintenance subtask.

For example, the subtask orchestration prompt information includes the first operation and maintenance task sub-intention and description information of the API corresponding to the operation and maintenance scenario intention.

The first device splices a first network intention and the description information of the API corresponding to the operation and maintenance scenario intention in a task orchestration prompt template of the large language model, to obtain the subtask orchestration prompt information. A process of obtaining the subtask orchestration prompt information through splicing is similar to the process of obtaining the task orchestration prompt information through splicing in step C2. A difference lies in that, at least one operation and maintenance task sub-intention is used for splicing in a message field of the task orchestration prompt template when the subtask orchestration prompt information is obtained through splicing, while the entire operation and maintenance task intention is used for splicing in the message field of the task orchestration prompt template when the task orchestration prompt information is obtained through splicing. After obtaining the subtask orchestration prompt information, the second message processing device sends the subtask orchestration prompt information to the second decision device.

Step E2: The second decision device receives the subtask orchestration prompt information, and orchestrates the first network operation and maintenance subtask for the first operation and maintenance task sub-intention based on the second large language model and the API corresponding to the operation and maintenance scenario intention, to obtain first subtask information.

The second decision device inputs the subtask orchestration prompt information into the second large language model. The second large language model orchestrates the first network operation and maintenance subtask for the first operation and maintenance task sub-intention based on a prompt of the subtask orchestration prompt information and the description information of the API corresponding to the operation and maintenance scenario intention, to obtain the first subtask information. For example, an orchestration process is: determining a first API needed to complete the first operation and maintenance task sub-intention corresponding to the operation and maintenance scenario intention, and a call sequence and an input parameter of the first API needed to complete the first operation and maintenance task sub-intention, and generating the first subtask information based on the call sequence and the input parameter of the first API needed to complete the first operation and maintenance task sub-intention. The second large language model outputs the first subtask information.

Step E3: The second decision device outputs the first subtask information to the second message processing device, and the first device receives the first subtask information.

The first subtask information indicates the first network operation and maintenance subtask, and obtaining the first subtask information is obtaining the first network operation and maintenance subtask

1205: The first device executes the first network operation and maintenance subtask, and outputs an execution result of the first network operation and maintenance subtask to the first message processing device.

For example, the first device executes the first network operation and maintenance subtask based on the first subtask information. This process is similar to the process in which the message processing device 20 executes the operation and maintenance subtask based on the subtask information of the network operation and maintenance subtask in step 1005. Details are not described herein again.

1206: The second device obtains the second operation and maintenance task sub-intention, and generates a second network operation and maintenance subtask based on the second operation and maintenance task sub-intention and a second large language model that interworks with the second device.

Step 1206 is similar to step 1204, and is not described herein again.

1207: The second device executes the second network operation and maintenance subtask, and outputs an execution result of the second network operation and maintenance subtask to the first message processing device.

Step 1207 is similar to step 1205, and is not described herein again.

1208: The first message processing device receives the execution result of the first network operation and maintenance subtask and the execution result of the second network operation and maintenance subtask.

The foregoing step 1205, step 1207, and step 1208 are described by using an example in which the first message processing device passively obtains the execution results of the network operation and maintenance subtasks. In some other embodiments, alternatively, the first message processing device may proactively obtain the execution result of the first network operation and maintenance subtask from the first device, and proactively obtain the execution result of the second network operation and maintenance subtask from the second device. In this case, the first device and the second device do not need to proactively send the execution results of the network operation and maintenance subtasks.

1209: The first message processing device outputs a dialog response of the dialog message to the client based on the execution result of the first network operation and maintenance subtask and the execution result of the second network operation and maintenance subtask.

For example, the first message processing device determines an execution result of the network operation and maintenance task based on the execution result of the first network operation and maintenance subtask and the execution result of the second network operation and maintenance subtask, and outputs the dialog response to the client based on the execution result of the network operation and maintenance task.

The process shown in the foregoing step 1201 to step 1209 is described by using an example in which the network operation and maintenance task intention includes two operation and maintenance task sub-intentions. In some other embodiments, the network operation and maintenance task intention includes more than two operation and maintenance task sub-intentions. The first message processing device delivers the more than two operation and maintenance task sub-intentions to a plurality of second message processing devices. Each second message processing device may obtain one or more operation and maintenance task sub-intentions; orchestrate a network operation and maintenance subtask for the one or more operation and maintenance task sub-intentions based on a second large language model that interworks with the second message processing device, to obtain one or more network operation and maintenance subtasks; execute at least one network operation and maintenance subtask; and send the at least one network operation and maintenance subtask to the first message processing module. In this way, the first message processing module can obtain execution results of network operation and maintenance subtasks corresponding to all operation and maintenance task sub-intentions, and output the dialog response to the client based on the obtained execution results. When obtaining a plurality of first network operation and maintenance subtasks, the second message processing device sequentially executes the plurality of first network operation and maintenance subtasks based on an execution sequence of the plurality of first network operation and maintenance subtasks. This process is similar to the process in which the message processing device 20 sequentially executes the plurality of network operation and maintenance subtasks based on the execution sequence of the plurality of network operation and maintenance subtasks in step 1005.

1210: The client receives the dialog response, and displays the dialog response on a dialog interface.

Step 1210 is similar to step 1007, and step 1210 is not described herein again.

The method provided in the embodiment shown in FIG. 12 can achieve the beneficial effects brought by the embodiment shown in FIG. 10. In addition, the first session processor distributes the operation and maintenance task sub-intentions in the operation and maintenance task intention to the plurality of second message processing devices, and the plurality of second message processing devices process the operation and maintenance task sub-intentions in parallel. This improves efficiency of processing the operation and maintenance task intention, and reduces response duration of the dialog message. In addition, the plurality of second message processing devices separately orchestrate the network operation and maintenance subtasks for the delivered operation and maintenance task sub-intentions by using second large language models in second decision devices connected to the plurality of second message processing devices, to avoid task congestion in the first large language model, thereby further improving the efficiency of processing the operation and maintenance task intention, and reducing the response duration of the dialog message.

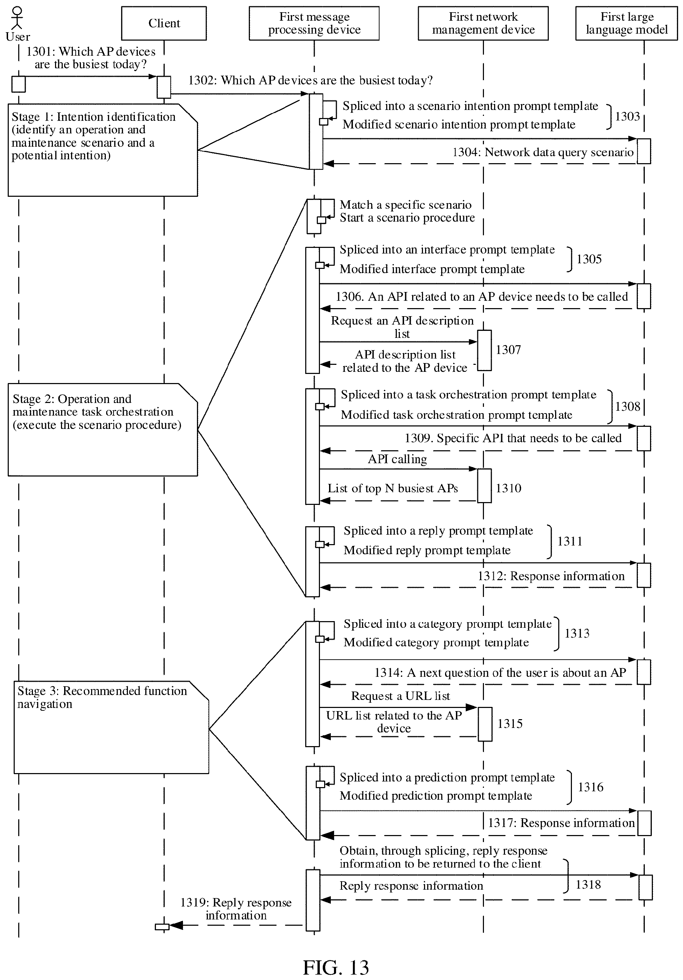

The embodiments shown in FIG. 10 and FIG. 12 are both described by using examples in which the first message processing device first obtains the network operation and maintenance intention of the dialog message, and then orchestrates the network operation and maintenance task based on the network operation and maintenance intention. In some other embodiments, the first message processing device identifies the network operation and maintenance intention and orchestrates the network operation and maintenance task at a time based on the first large language model. FIG. 13 is used as an example. FIG. 13 is a flowchart of another large language model-based network operation and maintenance method according to an embodiment of this application.

1301: A user inputs a dialog message "which AP devices are the busiest today?" on a dialog interface of a client.

1302: The client sends the dialog message "which AP devices are the busiest today?" to a first message processing device.

For a manner of sending the dialog message, refer to the foregoing step 1002.

After receiving the dialog message, the first message processing device enters a stage 1 shown in the following step 1303 to step 1305, to perform scenario intention identification on the dialog message, so as to identify a potential intention in an operation and maintenance scenario to which the dialog message belongs.

1303: The first message processing device splices the received dialog message into a scenario intention prompt template to obtain a modified scenario intention prompt template (that is, scenario intention prompt information), and sends the modified scenario intention prompt template to a first large language model, to request the first large language model to perform scenario intention identification on the dialog message. The modified scenario intention prompt template is as follows:
{For a user question: which APs are the busiest today,
which of the following scenarios is involved? Return in a number form:
   0. others
   1. network query
   2. network report viewing
   3. fault information viewing}.

1304: The first large language model receives the modified scenario intention prompt template, analyzes and infers the dialog message of the user based on the modified scenario intention prompt template, determines that "which APs are the busiest today" belongs to a network data query scenario, and returns the network data query scenario in a number form, that is, returns a number "1".

After determining the network operation and maintenance scenario, the first message processing device matches a specific scenario based on the number "1", and enters, based on the specific scenario, a stage 2 shown in step 1305 to step 1312, to orchestrate a network operation and maintenance task, so as to perform a scenario procedure.

1305: If determining that the dialog message of the user is corresponding to the network data query scenario, the first message processing device splices description information of the network data query scenario into an interface prompt template to obtain a modified interface prompt template (that is, interface prompt information), and sends the modified interface prompt template to the first large language model. The modified interface prompt template is as follows:
{Which of the following categories is used to select an API to answer a question "{query}"? Return in a number form:
1. about an AP device
2. about a switch device
3. about a gateway device}; where
"query" herein is the dialog message.

1306: The first large language model receives the modified interface prompt template, analyzes and infers the dialog message, and determines that an API related to an AP device needs to be called to answer the dialog message (that is, a user question), and returns "1" in a number form.

1307: After receiving an intention response related to the API, the first message processing device sends a request for obtaining an API description list of the AP device (that is, requests to obtain description information of the API) to a first network management device, and obtains the API description list related to the AP device.

1308: The first message processing device splices the API description list of the AP device into a task orchestration prompt template to obtain a modified task orchestration prompt template, and sends the modified task orchestration prompt template to the first large language model. The modified task orchestration prompt template is as follows:
{ {For an API description list about an AP},
which API needs to be called by {query}, and what parameters need to be transferred? Directly give an answer, and do not provide an analysis process}.

1309: After receiving the modified task orchestration prompt template, the first large language model determines a specific API (namely, a first API) that needs to be called and an input parameter of the API that needs to be called, and returns an API call list to the first message processing device. The API call list is task information, and the API call list includes an identifier and the input parameter of the API that needs to be called.

1310: The first message processing device sends an API call message to the first network management device based on the returned API call list, to request API calling; and the first network management device returns an API call result to the first message processing device based on the API call list in the API call message, for example, returns a list of top N busiest APs.

1311: The first message processing device splices the returned list of top N busiest APs into a reply prompt template to obtain a modified reply prompt template, and sends the modified reply prompt template to the first large language model, to prompt the first large language model module to make a reply to the dialog message. The modified reply prompt template is as follows:
{Provide an analysis and a summary of { query} based on {return} }, where
"return" indicates the API call result: the list of top N busiest APs.

1312: After receiving the modified reply prompt template, the first large language model generates response information based on the reply prompt template, and returns the response information (that is, an operation and maintenance task intention + an execution result of the network operation and maintenance task) to the first dialog processor. The response information is as follows:
{It can be determined, based on channel usage (channel usage) of each AP, which APs bear a larger quantity of devices during data collection, where the following APs are connected to a larger quantity of devices:
AP03 (SuZhou-A1 area, 87%)
h1-ap304 (SuZhou-A1 area, 83%)
szvb6oaphw36 (SuZhou-A1 area, 80%)
these APs have higher channel usage during data collection, and therefore may be considered relatively busy}.

The process shown in the foregoing step 1305 to step 1312 is a process of performing task orchestration based on a determined operation and maintenance scenario intention, and performing the network operation and maintenance task for one or more times to obtain question-related reply information. In some other embodiments, the first message processing device further enters a stage 3 shown in step 1313 to step 1318, to perform recommended function navigation for the user.

1313: The first message processing device module splices the dialog message "query" to a category prompt template of a uniform resource locator (uniform resource locator, URL) to obtain a modified category prompt template, and sends the modified category prompt template to the first large language model, to prompt the first large language model to provide recommended navigation information of the user question (that is, the dialog message). The modified category prompt template is as follows:
{Which of the following categories is used to select a URL for a question "{query}"? Return in a number form:
1. about an AP
2. about a customer profile}.

1314: After receiving the modified category prompt template, if determining, based on the modified category prompt template, that a next question of the user is about an AP, the first large language model returns 1 in a number form; and the first message processing device receives a response "1" of the large language model.

1315: The first message processing device sends a URL obtaining request to the first network management device, to request to obtain a URL list related to the AP device, and receives response information returned by the first manager for obtaining the URL, where the response information includes the URL list related to the AP device, and the list includes the URL and description information of the URL.

1316: The first message processing device splices the returned URL list related to the AP device into a prediction prompt template to obtain a modified prediction prompt template, and sends the modified prediction prompt template to the first large language model, to prompt the first large language model module to recommend a related URL link (that is, a predicted intention) for a next dialog message. The modified prediction prompt template is as follows:
{Question-related Web URL information is as follows:
{URL list and description information of each URL}
Which URL is related to {query}? Provide a URL link. An output format is:
   brief descriptions of the URL:
   URL: }.

1317: After receiving the modified prediction prompt template, the first large language model recommends a related URL for a dialog intention of the next dialog message based on a prompt of the modified prediction prompt template. It is assumed that the recommended content (that is, the predicted intention) is "brief descriptions of the URL: viewing details about more busy APs; URL: https://operation and maintenance task intention". The first large language model uses the recommended content as response information, and returns the response information to the first message processing device; and the first message processing device receives the response information.

1318: The first message processing device sends the response information obtained in the foregoing three stages to the first large language model for splicing, or sends the initial response information obtained in the foregoing three stages to the first large language model for splicing, to obtain reply response information (that is, a dialog response) that is represented by a natural language and that is to be returned to the client. For example, the reply response information that is represented by the natural language and that is returned by the first large language model is as follows:
{It can be determined, based on channel usage of each AP, which APs bear a larger quantity of devices during data collection, where the following APs are connected to a larger quantity of devices:
AP03 (SZ-A1 area, 87%)
h1-ap304 (SZ-A1 area, 83%)
szvb6oaphw36 (SZ-A1 area, 80%)
these APs have higher channel usage during data collection, and therefore may be considered relatively busy};
to view details about more busy APs, click [here] (https://operation and maintenance task intention) }.

1319: The first message processing device sends the reply response information to the client, and the client displays the reply response information on the dialog interface.

The embodiment shown in FIG. 13 is described by using an example in which the recommended navigation information includes the predicted intentions: "view more busy APs" and the URL related to the task recommendation information. In some other embodiments, the predicted intentions do not include the URL related to the task recommendation information, that is, the URL is an option of the predicted intention.

The embodiments shown in FIG. 10 to FIG. 13 are all described by using examples in which message processing devices (for example, the first message processing device and the second message processing device) call large language models in decision devices (for example, the first decision device and the second decision device). In some other embodiments, if computing resources of a message processing device are sufficient, a large language model may be alternatively deployed in the message processing device. The message processing device completes, based on the local large language model, method steps that are completed by a decision device based on the large language model. Therefore, a large language model in another device does not need to be called, and interaction between the message processing device and the another device is reduced. In this case, no decision device needs to be disposed in the network operation and maintenance system. In the foregoing embodiments shown in FIG. 10 to FIG. 13 are all described by using examples in which the message processing device provides the decision device with the prompt information (such as the intention prompt information, the scenario intention prompt information, the task prompt information, the interface type prompt information, the task orchestration prompt information, the format conversion prompt information, and the prediction prompt information) of the large language model. In some other embodiments, the message processing device does not provide the decision device with prompt information, but provides the first decision device with related information (such as the dialog message and the network operation and maintenance intention) used for splicing the prompt information. The decision device splices the related information into a corresponding prompt template to obtain prompt information of the large language model, and inputs the prompt information into the large language model.

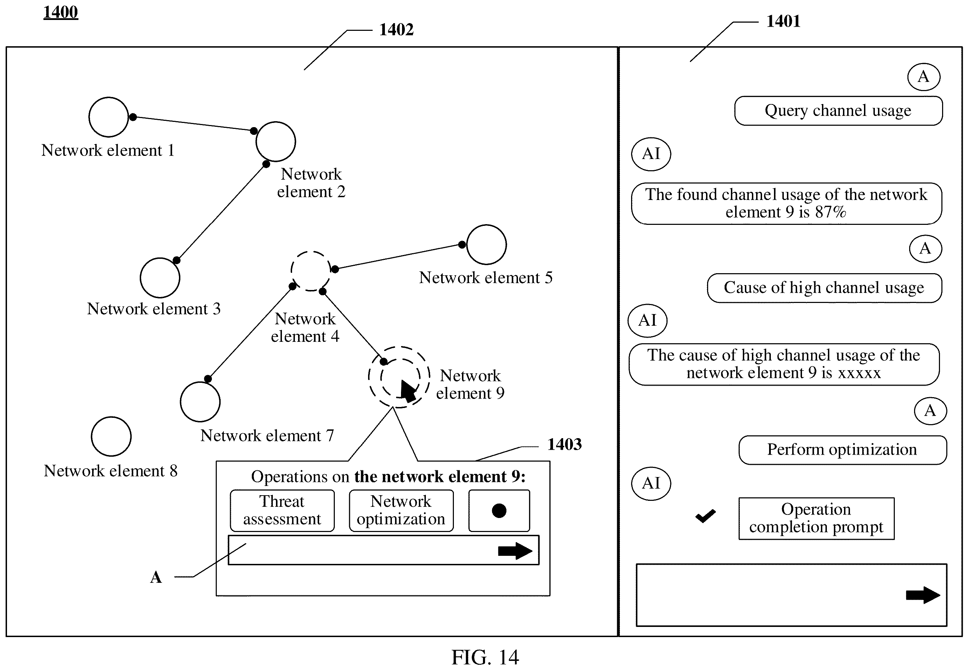

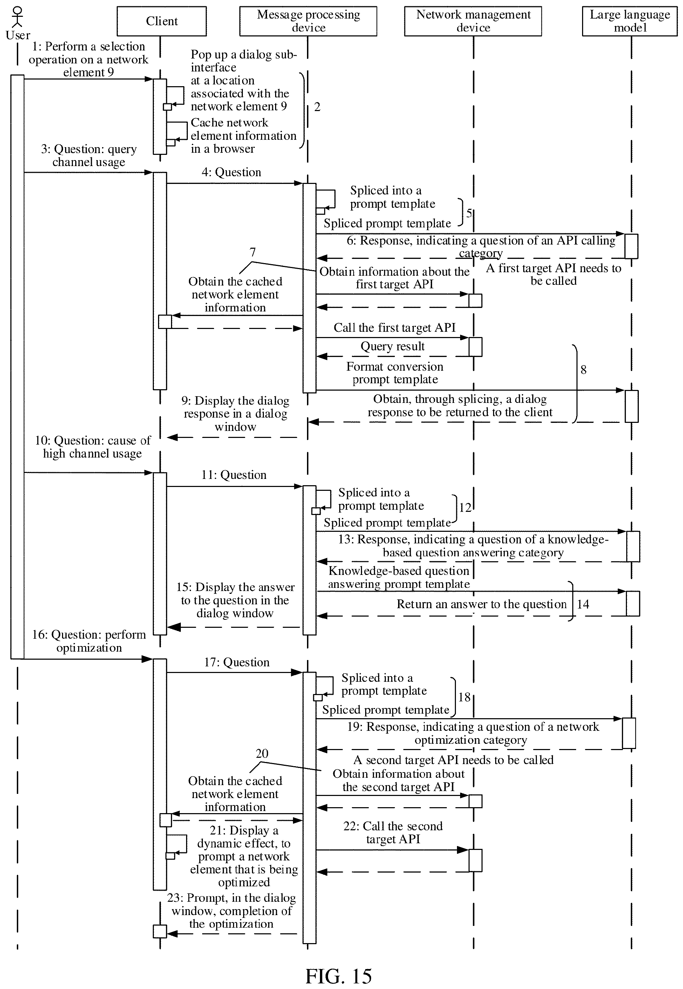

The prompt templates (for example, the intention prompt template, the scenario intention prompt template, the task intention prompt template, the interface prompt template, the task orchestration prompt template, the conversion prompt template, the prediction prompt template, and a potential intention prompt template) of the large language model in this application are all prompt templates of the large language model, so that the large language model can output correct results based on prompts of the prompt templates. The foregoing is described by using an example in which the user performs the human-computer dialog with the first message processing device by using the dialog window of the dialog interface. In some other embodiments, the user may alternatively trigger the human-computer dialog with the first message processing device by using the information presentation window of the dialog interface. The following provides descriptions with reference to FIG. 14 and FIG. 15 by using examples.

On a dialog interface 1400 shown in FIG. 14, when a user triggers a client to open the dialog interface 1400, the client displays the dialog interface 1400 in an initial state. The interface 1400 in the initial state is divided into a dialog window 1401 and an information presentation window 1402. The dialog window 1401 is a human-computer question and answer box, and may perform real-time human-computer interaction. The information presentation window 1402 is a graph box presented in real time. An element in the icon box may be selected to trigger a human-computer dialog, and a status of the element may be presented in the graph box based on a dialog message and a dialog response.

When a page of the dialog interface 1400 is in the initial state (for example, when the dialog interface 1400 is just opened), detailed network operation and maintenance information, for example, a network topology view, an alarm log list, and a performance statistics graph, is presented in the information presentation window 1402. For example, a network topology view formed by network elements (that is, network devices) 1 to 9 is displayed in the information presentation window 1402. The user may trigger elements such as a network element and an alarm in the information presentation window 1402 to perform a human-computer dialog with a message processing device for the elements. A diagram of a human-computer dialog procedure shown in FIG. 15 is used as an example. The human-computer dialog procedure includes the following step 1 to step 23.

Step 1: Assuming that a client is a browser page, and the dialog interface 1400 is displayed on the browser page, the user performs a selection operation (for example, a click operation or a voice command) on a network element 9 displayed in the network topology view.

Step 2: In response to the selection operation on the network element 9, the client pops up a dialog sub-interface 1403 based on the network element 9 at a location that is in the information presentation window 1402 and that is associated with the network element 9 (for example, near the network element 9), and caches network element information of the network element in a browser.

The network element information of the network element includes an identifier (identifier, ID) of the network element and/or an address of the network element. The network element information is cached in the browser, so that the message processing device can subsequently perform a human-computer dialog with the user for the selected network element based on the network element information.

Step 3: The user inputs information related to network operation and maintenance in a dialog box A on the dialog sub-interface 1403. For example, the user inputs a 1^{st} question in the dialog box A, where the 1^{st} question is a query question: Query channel usage.

Step 4: The client displays, in the information presentation window 1402 of the dialog interface, the 1^{st} question input by the user, and sends the question to the message processing device.

Step 5: The message processing device optimizes the 1^{st} question, splices an optimized question into a prompt template, and sends a spliced prompt template to a large language model; and the large model determines an operation and maintenance scenario intention and an operation and maintenance task intention, and orchestrates an operation and maintenance task.

For example, the message processing device obtains the cached network element information from the browser, and optimizes the user question based on the network element information to obtain the optimized question: Query channel usage of the network element 9. In some other embodiments, the message processing device does not optimize the question, but splices the question to an operation and maintenance intention prompt template. Alternatively, after optimizing the question based on the cached network element information, the client provides an optimized question for the message processing device, and the message processing device splices the optimized question into an operation and maintenance intention prompt template.

Step 6: Based on a prompt of the prompt template, the large language model identifies that the operation and maintenance scenario intention of the question is a question of an API calling category and the operation and maintenance task intention of the question is querying the channel usage of the network element 9, determines that an API (referred to as a first target API) used for querying the channel usage needs to be called, and returns, to the client, a network operation and maintenance intention and an identifier of the first target API that needs to be called.

Step 7: After determining the question of the API calling category, the message processing device obtains parameter information of the first target API from a network management device, associates the web page 9 that is previously selected by the user in the information presentation window 1402, obtains, from the client, the network element information that is cached after the user selects the network element for the first time, and uses the network element information to fill the parameter information of the first target API.

Step 8: The message processing device calls the first target API to query the channel usage of the network element 9, to obtain a query result, splices the query result into a format conversion prompt template, and provides a spliced format conversion prompt template for the large language model; and the large language model performs format conversion on the query result based on a prompt of the format conversion prompt template, uses a query result obtained through format conversion as a dialog response returned to the client, and sends the dialog response to the message processing device.

Step 9: The message processing device sends the dialog response to the client, and the client displays the dialog response in the dialog window 1401 of the dialog interface 1400: The found channel usage of the network element 9 is 87%.

Step 10: The user continues to input a 2^{nd} question in the dialog box A or the dialog window 1401: cause of high channel usage.

Step 11: The client displays, in the dialog window 1401, the 2^{nd} question input by the user, and sends the 2^{nd} question to the message processing device.

Step 12: Similar to step 5, the message processing device optimizes the 2^{nd} question, splices an optimized 2^{nd} question into a prompt template, and sends a spliced prompt template to the large language model; and the large model determines an operation and maintenance scenario intention and an operation and maintenance task intention, and orchestrates an operation and maintenance task.

Step 13: Based on a prompt of the prompt template, the large language model identifies that the operation and maintenance scenario intention of the 2^{nd} question is a question of a knowledge-based question answering type and the operation and maintenance task intention of the question is cause of high channel usage of the network element 9, and sends a network operation and maintenance intention that includes the operation and maintenance scenario intention and the operation and maintenance task intention to the message processing device.

Step 14: The message processing device splices the network operation and maintenance intention into a knowledge-based question answering prompt template, and sends a spliced knowledge-based question answering prompt template to the large language model; and the large language model outputs an answer to the 2^{nd} question based on a prompt of the knowledge-based question answering prompt template, and returns the answer to the 2^{nd} question to the message processing device.

Step 15: The message processing device returns the answer to the client, and the client displays the answer in the dialog window 1401: The cause of high channel usage of the network element 9 is xxxxx.

Step 16: The user continues to input a 3^{rd} question in the dialog box A or the dialog window 1401: Perform optimization.

Step 17: The client displays, in the dialog window 1401, the 3^{rd} question input by the user, and sends the 3^{rd} question to the message processing device.

Step 18: Similar to step 5, the message processing device optimizes the 3^{rd} question, splices an optimized 3^{rd} question into a prompt template, and sends a spliced prompt template to the large language model; and the large model determines an operation and maintenance scenario intention and an operation and maintenance task intention, and orchestrates an operation and maintenance task.

Step 19: Based on a prompt of the prompt template, the large language model identifies that the operation and maintenance scenario intention of the 3^{rd} question is a question of a network optimization category and the operation and maintenance task intention of the question is optimizing the channel usage of the network element 9, determines that an API (a second target API) used for network optimization needs to be called, and returns, to the client, a network operation and maintenance intention and the identifier of the first target API that needs to be called.

Step 20: After determining the question of the network optimization category, the message processing device obtains parameter information of the second target API from the network management device, associates the web page 9 that is previously selected by the user in the information presentation window 1402, obtains, from the client, the network element information that is cached after the user selects the network element for the first time, and uses the network element information to fill the parameter information of the second target API.

Step 21: After determining the question of the network optimization category, the message processing device further notifies the client of the question of the network optimization category, and the client displays a dynamic effect on an icon of the network element 9 in the information presentation window 1402 based on the notification, to prompt a network element that is being optimized. In this way, dynamic linkage can be performed with a dialog message in the dialog window 1401, to implement a dynamic linkage effect.

Step 22: The message processing device calls the second target API to optimize the channel usage of the network element 9, to obtain an optimization result, splices the optimization result into a format conversion prompt template, and provides a spliced format conversion prompt template for the large language model; and the large language model performs format conversion on the optimization result based on a prompt of the format conversion prompt template, and sends an optimization result obtained through format conversion to the message processing device.

Step 23: The message processing device sends the optimization result obtained through format conversion to the client; and the client displays the optimization result "√" in the dialog window 1401 to prompt completion of the optimization, and cancels displaying of the dynamic effect on the icon of the network element 9, to restore the icon of the network element 9 to an initial state.

For the foregoing dialog procedure, the user may select an element to be operated and maintained in the information presentation window, and then input simple question description information in the dialog message instead of inputting complex question description information. In addition, the user may continuously question about the element selected by the user. The message processing device may obtain a specific question of the user by associating operations performed by the user in the information presentation window with output information. Then, the large language model is used to analyze a network operation and maintenance intention in the specific question, orchestrate an operation and maintenance task used to complete the network operation and maintenance intention, and execute the network operation and maintenance task. In some other embodiments, the dialog sub-interface 1403 further includes a plurality of operation and maintenance options, and the operation and maintenance options are used to confirm operation and maintenance task types (such as threat assessment and network optimization) for the network element. The user may perform a selection and confirmation operation on an operation and maintenance option without inputting a question. In response to the selection and confirmation operation, the client uses an operation and maintenance task type corresponding to the selected operation and maintenance option as a user question, and the user does not need to input the question. This further simplifies an operation procedure of the user.

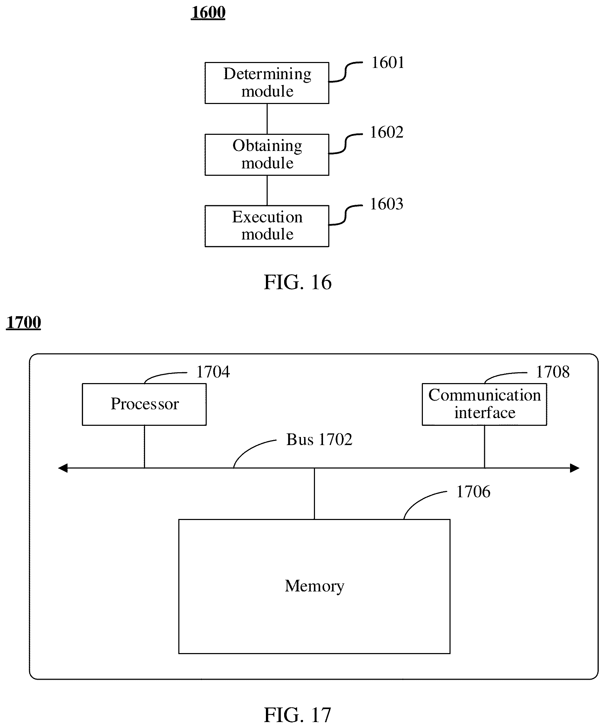

The foregoing describes methods in embodiments of this application, and the following describes an apparatus in embodiments of this application. It should be understood that, the apparatus and a device that are described below have a same inventive concept as the foregoing network operation and maintenance methods, and can implement beneficial effects that can be achieved in the foregoing method embodiments. The following describes the network operation and maintenance apparatus and the device with reference to FIG. 16 to FIG. 17. It should be understood that the technical features described in the foregoing method embodiments are also applicable to the following apparatus embodiments.

FIG. 16 is a diagram of a structure of a large language model-based network operation and maintenance apparatus. The apparatus 1600 shown in FIG. 16 includes: a determining module 1601, configured to determine a network operation and maintenance intention based on a large language model and an input dialog message; an obtaining module 1602, configured to obtain a network operation and maintenance task based on the network operation and maintenance intention; and an execution module 1603, configured to execute the network operation and maintenance task and output a dialog response.

In a possible implementation, the network operation and maintenance intention includes an operation and maintenance task intention and an operation and maintenance scenario intention, and the obtaining module 1602 is configured to orchestrate the network operation and maintenance task for the operation and maintenance task intention based on the large language model and an application programming interface corresponding to the operation and maintenance scenario intention, to obtain task information, where the application programming interface is configured to complete the network operation and maintenance task corresponding to the operation and maintenance scenario intention, and the task information indicates a process of calling the application programming interface during execution of the network operation and maintenance task.

In a possible implementation, the operation and maintenance task intention includes a plurality of operation and maintenance task sub-intentions, and the obtaining module 1602 is configured to: separately orchestrate network operation and maintenance subtasks for the plurality of operation and maintenance task sub-intentions based on the large language model and the application programming interface, to obtain a plurality of pieces of subtask information, where the subtask information indicates a process of calling the application programming interface during execution of the network operation and maintenance subtask; and obtain the task information based on the plurality of pieces of subtask information.

In a possible implementation, the obtaining module 1602 includes: an obtaining unit, configured to obtain description information of the application programming interface; a generation unit, configured to generate task orchestration prompt information based on the operation and maintenance task intention, a first prompt statement, and the description information of the application programming interface, where the first prompt statement is used to prompt the large language model to orchestrate the network operation and maintenance task for the operation and maintenance task intention based on the application programming interface, and prompt the large language model to output the task information of the orchestrated network operation and maintenance task; a sending unit, configured to send the task orchestration prompt information to a device running the large language model; and a receiving unit, configured to receive the task information returned by the device.

In a possible implementation, the obtaining unit is configured to: send an information obtaining request to a network management device, where the information obtaining request indicates to obtain the description information of the application programming interface; and receive the description information returned by the network management device.

In a possible implementation, the execution module 1603 is configured to: send an interface calling request to the network management device based on the task information, where the interface calling request indicates to call the application programming interface, to execute the network operation and maintenance task; and receive an interface calling response returned by the network management device, where the interface calling response includes an execution result of the network operation and maintenance task.

In a possible implementation, the apparatus 1600 further includes: a sending module, configured to send a first operation and maintenance task sub-intention to a first device, and send a second operation and maintenance task sub-intention to a second device; the obtaining module is further configured to obtain an execution result of a first network operation and maintenance subtask from the first device, and obtain an execution result of a second network operation and maintenance subtask from the second device; and an output module, configured to output the dialog response based on the execution result of the first network operation and maintenance subtask and the execution result of the second network operation and maintenance subtask.

In a possible implementation, the determining module 1601 is configured to: generate operation and maintenance intention prompt information based on the dialog message and a second prompt statement, where the second prompt statement is used to prompt the large language model to identify the network operation and maintenance intention of the dialog message, and prompt the large language model to output the identified network operation and maintenance intention; send the operation and maintenance intention prompt information to the second device running the large language model; and receive the network operation and maintenance intention returned by the second device.

Based on the descriptions about the foregoing implementations, a person skilled in the art can understand that, for the purpose of convenient and brief description, division into the foregoing functional modules of the apparatus 1600 is merely used as an example for description. In actual application, the foregoing functions may be allocated to different functional modules for implementation depending on a requirement. In other words, an inner structure of the apparatus is divided into different functional modules to implement all or some of the functions described above.

FIG. 17 is a diagram of a structure of a computer device according to an embodiment of this application. The computer device 1700 shown in FIG. 17 is configured as any module (for example, the client, the first message processing device, the second message processing device, the first decision device, the second message processing device, or the first network management device) in the foregoing network operation and maintenance system. As shown in FIG. 17, the computer device 1700 includes a bus 1702, a processor 1704, a memory 1706, and a communication interface 1708. The processor 1704, the memory 1706, and the communication interface 1708 communicate with each other through the bus 1702. The computer device 1700 may be a server or a terminal device. It should be understood that quantities of processors and memories in the computer device 1700 are not limited in this application. The bus 1702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 17, but it does not indicate that there is only one bus or one type of bus. The bus 1704 may include a path on which information is transmitted between the components (for example, the memory 1706, the processor 1704, and the communication interface 1708) of the computer device 1700. The processor 1704 may include any one or more of processors such as a central processing unit (central processing unit, CPU), a graphics processing unit (graphics processing unit, GPU), a microprocessor (microprocessor, MP), or a digital signal processor (digital signal processor, DSP). The memory 1706 may include a volatile memory (volatile memory), for example, a random access memory (Random access memory, RAM). The memory 1706 may further include a non-volatile memory (non-volatile memory), for example, a read-only memory (read-only memory, ROM), a flash memory, a hard disk drive (hard disk drive, HDD), or a solid state drive (solid state drive, SSD). The memory 1706 stores executable program code, and the processor 1704 executes the executable program code to separately implement functions of any module in the foregoing network operation and maintenance system, thereby implementing a large language model-based network operation and maintenance method. In other words, the memory 1706 stores instructions used for performing the large language model-based network operation and maintenance method. Alternatively, the memory 1706 stores executable program code, and the processor 1704 executes the executable program code to implement a large language model-based network operation and maintenance method performed by any module in the network operation and maintenance system. For example, the computer device 1700 is configured as a message processing device, and the processor 1704 executes the executable program code to implement the large language model-based network operation and maintenance method performed by the message processing device. The communication interface 1708 uses, by way of example rather than limitation, a transceiver module like a network interface card or a transceiver, to implement communication between the computer device 1700 and another device or a communication network.

An example embodiment further provides a computer-readable storage medium, for example, a memory including program code. The program code may be executed by a processor of a computer device to complete a large language model-based network operation and maintenance method performed by any module in the network operation and maintenance system. For example, the computer-readable storage medium is a non-transitory computer-readable storage medium: a read-only memory (read-only memory, ROM), a random access memory (random access memory, RAM), a compact disc read-only memory (compact disc read-only memory, CD-ROM), a magnetic tape, a floppy disk, an optical data storage device, or the like.

An embodiment of this application further provides a computer program product or a computer program. The computer program product or the computer program includes program code. The program code is stored in a computer-readable storage medium. A processor of a computer device reads the program code from the computer-readable storage medium, and the processor executes the program code, to cause the computer device to perform a large language model-based network operation and maintenance method performed by any module in the network operation and maintenance system.

The apparatus, the device, the computer-readable storage medium, and the computer program product, that are provided in embodiments are all configured to perform the corresponding methods provided above. Therefore, for beneficial effects thereof, refer to the beneficial effects of the corresponding methods provided above. Details are not described herein again.

In the several embodiments provided in this application, it should be understood that the disclosed apparatuses and methods may be implemented in other manners. For example, the described apparatus embodiments are merely examples. For example, division into the modules or the units is merely logical function division and may be other division in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may be one or more physical units, may be located in one place, or may be distributed in different places. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in a form of software functional unit and sold or used as an independent product, the integrated unit may be stored in a readable storage medium. Based on such an understanding, the technical solutions of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, like a USB flash drive, a removable hard disk, a ROM, a RAM, a magnetic disk, or an optical disc.

In descriptions of this application, unless otherwise specified, "/" means "or". For example, A/B may represent A or B. A term "and/or" in this specification describes only an association relationship between associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" are not used to limit a quantity and an execution sequence, and the terms such as "first" and "second" do not indicate a definite difference. In this application, a term "example", "for example", or the like is used to give an example, an illustration, or a description. Any embodiment or design scheme described as "example" or "for example" in this application should not be construed as being preferred or having more advantages over other embodiments or design schemes. Exactly, use of the term "example", "for example", or the like is intended to present a related concept in a specific manner. It should be noted that information (including but not limited to user equipment information and personal information of a user), data (including but not limited to data used for analysis, stored data, and presented data), and signals in this application are all used under authorization by the user or full authorization by all parties, and collection, use, and processing of related data need to conform to related laws, regulations, and standards of related countries and regions. For example, all the dialog messages in this application are obtained under full authorization. All of the foregoing optional technical solutions may form optional embodiments of this disclosure through any combination. Details are not described herein. The foregoing descriptions are merely optional embodiments of this application, but are not intended to limit this application. Any modification, equivalent replacement, improvement, or the like made without departing from the spirit and principle of this application shall fall within the protection scope of this application.

## Claims

1. A large language model-based network operation and maintenance method, wherein the method comprises:
determining a network operation and maintenance intention based on a large language model and an input dialog message;
obtaining a network operation and maintenance task based on the network operation and maintenance intention; and
executing the network operation and maintenance task and outputting a dialog response.

2. The method according to claim 1, wherein the network operation and maintenance intention comprises an operation and maintenance task intention and an operation and maintenance scenario intention, and the obtaining a network operation and maintenance task based on the network operation and maintenance intention comprises:
orchestrating the network operation and maintenance task for the operation and maintenance task intention based on the large language model and an application programming interface corresponding to the operation and maintenance scenario intention, to obtain task information, wherein the application programming interface is configured to complete the network operation and maintenance task corresponding to the operation and maintenance scenario intention, and the task information indicates a process of calling the application programming interface during execution of the network operation and maintenance task.

3. The method according to claim 2, wherein the operation and maintenance task intention comprises a plurality of operation and maintenance task sub-intentions, and the orchestrating the network operation and maintenance task for the operation and maintenance task intention based on the large language model and an application programming interface corresponding to the operation and maintenance scenario intention, to obtain task information comprises:
separately orchestrating network operation and maintenance subtasks for the plurality of operation and maintenance task sub-intentions based on the large language model and the application programming interface, to obtain a plurality of pieces of subtask information, wherein the subtask information indicates a process of calling the application programming interface during execution of the network operation and maintenance subtask; and
obtaining the task information based on the plurality of pieces of subtask information.

4. The method according to claim 2, wherein the orchestrating the network operation and maintenance task for the operation and maintenance task intention based on the large language model and an application programming interface corresponding to the operation and maintenance scenario intention, to obtain task information comprises:
obtaining description information of the application programming interface;
generating task orchestration prompt information based on the operation and maintenance task intention, a first prompt statement, and the description information of the application programming interface, wherein the first prompt statement is used to prompt the large language model to orchestrate the network operation and maintenance task for the operation and maintenance task intention based on the application programming interface, and prompt the large language model to output the task information of the orchestrated network operation and maintenance task;
sending the task orchestration prompt information to a device running the large language model; and
receiving the task information returned by the device.

5. The method according to claim 4, wherein the obtaining description information of the application programming interface comprises:
sending an information obtaining request to a network management device, wherein the information obtaining request indicates to obtain the description information of the application programming interface; and
receiving the description information returned by the network management device.

6. The method according to any one of claims 2 to 5, wherein the executing the network operation and maintenance task comprises:
sending an interface calling request to the network management device based on the task information, wherein the interface calling request indicates to call the application programming interface, to execute the network operation and maintenance task; and
receiving an interface calling response returned by the network management device, wherein the interface calling response comprises an execution result of the network operation and maintenance task.

7. The method according to claim 1, wherein the network operation and maintenance intention comprises a first operation and maintenance task sub-intention and a second operation and maintenance task sub-intention, and after the determining a network operation and maintenance intention, the method further comprises:
sending the first operation and maintenance task sub-intention to a first device, and sending the second operation and maintenance task sub-intention to a second device;
obtaining an execution result of the first network operation and maintenance subtask from the first device, and obtaining an execution result of the second network operation and maintenance subtask from the second device; and
outputting the dialog response based on the execution result of the first network operation and maintenance subtask and the execution result of the second network operation and maintenance subtask.

8. The method according to any one of claims 1 to 7, wherein the determining a network operation and maintenance intention based on a large language model and an input dialog message comprises:
generating operation and maintenance intention prompt information based on the dialog message and a second prompt statement, wherein the second prompt statement is used to prompt the large language model to identify the network operation and maintenance intention of the dialog message, and prompt the large language model to output the identified network operation and maintenance intention;
sending the operation and maintenance intention prompt information to the device running the large language model; and
receiving the network operation and maintenance intention returned by the device.

9. A large language model-based network operation and maintenance apparatus, wherein the apparatus comprises:
a determining module, configured to determine a network operation and maintenance intention based on a large language model and an input dialog message;
an obtaining module, configured to obtain a network operation and maintenance task based on the network operation and maintenance intention; and
an execution module, configured to execute the network operation and maintenance task and output a dialog response.

10. The apparatus according to claim 9, wherein the network operation and maintenance intention comprises an operation and maintenance task intention and an operation and maintenance scenario intention, and the obtaining module is configured to:
orchestrate the network operation and maintenance task for the operation and maintenance task intention based on the large language model and an application programming interface corresponding to the operation and maintenance scenario intention, to obtain task information, wherein the application programming interface is configured to complete the network operation and maintenance task corresponding to the operation and maintenance scenario intention, and the task information indicates a process of calling the application programming interface during execution of the network operation and maintenance task.

11. The apparatus according to claim 10, wherein the operation and maintenance task intention comprises a plurality of operation and maintenance task sub-intentions, and the obtaining module is configured to:
separately orchestrate network operation and maintenance subtasks for the plurality of operation and maintenance task sub-intentions based on the large language model and the application programming interface, to obtain a plurality of pieces of subtask information, wherein the subtask information indicates a process of calling the application programming interface during execution of the network operation and maintenance subtask; and
obtain the task information based on the plurality of pieces of subtask information.

12. The apparatus according to claim 10, wherein the obtaining module comprises:
an obtaining unit, configured to obtain description information of the application programming interface;
a generation unit, configured to generate task orchestration prompt information based on the operation and maintenance task intention, a first prompt statement, and the description information of the application programming interface, wherein the first prompt statement is used to prompt the large language model to orchestrate the network operation and maintenance task for the operation and maintenance task intention based on the application programming interface, and prompt the large language model to output the task information of the orchestrated network operation and maintenance task;
a sending unit, configured to send the task orchestration prompt information to a device running the large language model; and
a receiving unit, configured to receive the task information returned by the device.

13. The apparatus according to claim 12, wherein the obtaining unit is configured to:
send an information obtaining request to a network management device, wherein the information obtaining request indicates to obtain the description information of the application programming interface; and
receive the description information returned by the network management device.

14. The apparatus according to any one of claims 10 to 13, wherein the execution module is configured to:
send an interface calling request to the network management device based on the task information, wherein the interface calling request indicates to call the application programming interface, to execute the network operation and maintenance task; and
receive an interface calling response returned by the network management device, wherein the interface calling response comprises an execution result of the network operation and maintenance task.

15. The apparatus according to claim 9, wherein the apparatus further comprises:
a sending module, configured to send the first operation and maintenance task sub-intention to a first device, and send the second operation and maintenance task sub-intention to a second device;
the obtaining module is further configured to obtain an execution result of the first network operation and maintenance subtask from the first device, and obtain an execution result of the second network operation and maintenance subtask from the second device; and
an output module, configured to output the dialog response based on the execution result of the first network operation and maintenance subtask and the execution result of the second network operation and maintenance subtask.

16. The apparatus according to any one of claims 9 to 15, wherein the determining module is configured to:
generate operation and maintenance intention prompt information based on the dialog message and a second prompt statement, wherein the second prompt statement is used to prompt the large language model to identify the network operation and maintenance intention of the dialog message, and prompt the large language model to output the identified network operation and maintenance intention;
send the operation and maintenance intention prompt information to the second device running the large language model; and
receive the network operation and maintenance intention returned by the second device.

17. A computer device, wherein the computer device comprises a processor, and the processor is configured to execute program code, to cause the computer device to perform the method according to any one of claims 1 to 8.

18. A computer-readable storage medium, wherein the storage medium stores at least one piece of program code, and the at least one piece of program code is read by a processor, to cause a computer device to perform the method according to any one of claims 1 to 8.
